(19) **Europäisches Patentamt / European Patent Office / Office européen des brevets**

(11) **EP 3 475 476 B1**

(12) **EUROPEAN PATENT SPECIFICATION**

(45) Date of publication and mention of the grant of the patent:
**02.11.2022 Bulletin 2022/44**

(21) Application number: **17834670.6**

(22) Date of filing: **11.07.2017**

(51) International Patent Classification (IPC):
**D06F 37/30** (2020.01)  **D06F 37/38** (2006.01)
**D06F 37/40** (2006.01)  **D06F 37/24** (2006.01)
**H02K 16/02** (2006.01)

(52) Cooperative Patent Classification (CPC):
**D06F 37/304; H02K 16/02;** D06F 34/14;
D06F 37/245; D06F 37/38; D06F 37/40

(86) International application number:
**PCT/KR2017/007403**

(87) International publication number:
**WO 2018/021727 (01.02.2018 Gazette 2018/05)**

(54) **WASHING MACHINE**

WASCHMASCHINE

MACHINE À LAVER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.07.2016   JP 2016148896**
   **28.07.2016   JP 2016148897**
   **28.07.2016   JP 2016148898**
   **28.07.2016   JP 2016148899**
   **29.07.2016   JP 2016149871**
   **19.08.2016   JP 2016161073**
   **28.04.2017   KR 20170055769**

(43) Date of publication of application:
**01.05.2019 Bulletin 2019/18**

(73) Proprietor: **Samsung Electronics Co., Ltd.**
**Suwon-si, Gyeonggi-do 16677 (KR)**

(72) Inventors:
• **NAKAGAWA, Yukinori**
 **Yokohama-shi**
 **Kanagawa 230-0027 (JP)**
• **OSHIGE, Masahi**
 **Yokohama-shi**
 **Kanagawa 230-0027 (JP)**
• **KITAJIMA, Kenji**
 **Yokohama-shi**
 **Kanagawa 230-0027 (JP)**
• **SONODA, Yasuyuki**
 **Yokohama-shi**
 **Kanagawa 230-0027 (JP)**
• **FUNAKOSHI, Hidekazu**
 **Yokohama-shi**
 **Kanagawa 230-0027 (JP)**
• **UENO, Tomonori**
 **Yokohama-shi**
 **Kanagawa 230-0027 (JP)**
• **KATSUMOTO, Hiroshi**
 **Yokohama-shi**
 **Kanagawa 230-0027 (JP)**
• **NAGASAKI, Yasumasa**
 **Yokohama-shi**
 **Kanagawa 230-0027 (JP)**

(74) Representative: **Rose, Kathryn Clare**
**Venner Shipley LLP**
**200 Aldersgate**
**London EC1A 4HD (GB)**

(56) References cited:
WO-A1-2013/100440   WO-A1-2015/050397
KR-A- 20060 020 266   KR-A- 20110 139 433
KR-A- 20160 075 614   US-A1- 2001 008 354
US-A1- 2004 232 800   US-A1- 2013 160 499

## Description

### Technical Field

The disclosure relates to a washing machine including a motor.

### Background Art

In general, there has been known a rotating electric device in which two rotors and one stator are formed on the same shaft in a three-layer structure and simultaneously a common coil that generates separate rotating magnetic fields with respect to the two rotors is formed on the stator (for example, see Japanese Patent Publication No. 3480300).
In Japanese Patent Publication No. 3480300, each of the rotors is independently driven by applying a composite current formed by adding corresponding currents applied to the rotors, to a common coil formed on a stator. US2013/0160499A1 relates to a motor drive device for a motor for a washing machine of a double-rotor/double-stator structure that can selectively rotate a pulsator and a dehydrator without having a separate clutch.

### Disclosure of Invention

### Technical Problem

However, in the related art, since a size of an inverter for applying a composite current is large, a configuration thereof becomes complicated and cost is high. Also, since torque balance is used to prevent a current of one side of the composite current from having an effect on torque of another side, efficiency is low.
To overcome the above-described limitation, it is an aspect of the disclosure to provide a washing machine capable of independently driving two rotors using one inverter in a simple configuration without supplying a composite current.
Additional aspects of the disclosure will be set forth in part in the description which follows and, in part, will be apparent from the description, or may be learned by practice of the disclosure.

### Solution to Problem

In accordance with an aspect of the present invention, there is provided a washing machine according to claim 1.
The present disclosure also describes a washing machine that includes: a washing tub configured to accommodate water, a spin-drying tub rotatably installed in the washing tub and configured to accommodate laundry, a pulsator rotatably installed in the spin-drying tub and configured to stir the laundry, and a motor configured to rotate the spin-drying tub and the pulsator, wherein the motor includes an annular stator and a first rotor and a second rotor rotatable independently from the stator, wherein one of the first rotor and the second rotor is connected to the spin-drying tub, and wherein the other of the first rotor and the second rotor is connected to the pulsator.
The washing machine further includes a controller configured to drive the first rotor and the second rotor in a plurality of rotation modes, wherein the controller is formed of one inverter and drives the first rotor and the second rotor in the plurality of rotation modes by reversing magnetic poles of at least one of the first rotor and the second rotor.
The washing machine may further include a magnetic pole number converter configured to convert a magnetic pole number by reversing magnetic poles of at least one of the first rotor and the second rotor, wherein the controller drives the first rotor and the second rotor in the plurality of rotation modes by controlling a conversion operation of the magnetic pole number converter.
The one of the first rotor and the second rotor includes a plurality of convertible magnets with magnetic poles reversed based on the conversion operation of the magnetic pole number converter, and the other of the first rotor and the second rotor includes a plurality of fixed magnets with magnetic poles not reversed based on the conversion operation of the magnetic pole number converter.
The controller controls the conversion operation of the magnetic pole number converter to reverse some and all magnetic poles of the plurality of convertible magnets.
The controller controls the conversion operation of the magnetic pole number converter to magnetize all of the plurality of convertible magnets with a random magnetic flux amount.
The magnetic pole number converter has a common magnetic path with respect to the first rotor and the second rotor and converts a magnetic pole number by reversing magnetic poles of at least one of the first rotor and the second rotor when magnetization currents are applied to a coil wound on the magnetic path.
The magnetic pole number converter is tees of the stator, and wherein among the tees magnetized when magnetization currents are supplied to coils wound on the tees, magnetic resistance that passes through magnets of the rotor including a convertible magnets is greater than magnetic resistance near an air gap which does not pass through magnets of the rotor opposite to the rotor including the convertible magnets.

The magnetic pole number converter is tees of the stator, and wherein among the tees magnetized when magnetization currents are supplied to coils wound on the tees, magnetic resistance that passes through magnets of the rotor opposite to the rotor including a convertible magnets is greater than magnetic resistance near an air gap which does not pass through the magnets of the rotor opposite to the rotor including the convertible magnets.

The first rotor is an inner rotor disposed inside in a diametrical direction of the stator, and the second rotor is disposed outside in the diameter direction of the stator.

The outer rotor includes a plurality of convertible magnets with magnetic poles converted based on the conversion operation of the magnetic pole number converter, and the inner rotor includes a plurality of fixed magnets not converted based on the conversion operation of the magnetic pole number converter.

The plurality of rotation modes comprise a first rotation mode of driving the first rotor and the second rotor in opposite directions and a second rotation mode of driving the first rotor and the second rotor in the same direction.

The controller drives the spin-drying tub and the pulsator in the first rotation mode during a washing operation.

The controller drives the spin-drying tub and the pulsator in the second rotation mode during a spin-drying operation.

The controller drives the first rotor and the second rotor in two rotation modes having different rotation numbers.

The controller drives the first rotor and the second rotor in the second rotation mode during a high speed rotation mode in which rotation numbers of the first rotor and the second rotor are greater than a certain rotation number.

The first rotor and the second rotor are formed of two or more types of magnets having different coercive forces.

The stator includes a plurality of tees arranged at intervals in a circumferential direction and extended along a diametrical direction.

In accordance with another aspect of the disclosure, a washing machine includes: a washing tub; a spin-drying tub rotatably installed in the washing tub; a pulsator rotatably installed in the spin-drying tub; and a motor configured to rotate the spin-drying tub and the pulsator, the motor includes: a stator, an inner rotor, disposed inside of the stator with respect to a radial direction of the stator, connected to the spin-drying tub and rotatable independently from the stator, and configured to be driven in a plurality of rotation modes, and an outer rotor, disposed outside of the stator with respect to the radial direction of the stator, connected to the pulsator and rotatable independently from the stator, and configured to be driven in the plurality of rotation modes.

The washing machine may further include an inverter, connected to the motor, configured to apply a magnetization current to at least one coil provided on the stator to control a rotation mode among the plurality of rotation modes by changing a magnetic pole number of the outer rotor.

The inner rotor includes a plurality of fixed inner magnets having polarities which are not changeable according to a magnetized current applied to a coil provided on the stator, and the outer rotor includes a plurality of outer magnets including at least one convertible outer magnet, the at least one convertible outer magnet having a polarity which is changeable according to the magnetized current applied to the coil provided on the stator.

The plurality of outer magnets include a plurality of convertible outer magnets and at least one fixed outer magnet, at least two of the plurality of convertible outer magnets are arranged adjacent to one another, and the at least one fixed outer magnet has a polarity which is not changeable according to the magnetized current applied to the coil provided on the stator.

In accordance with another aspect of the disclosure, a washing machine includes: a washing tub; a spin-drying tub rotatably installed in the washing tub; a pulsator rotatably installed in the spin-drying tub; and a motor configured to rotate the spin-drying tub and the pulsator, the motor includes: a stator having at least one tee with at least one coil wound on the at least one tee, an inner rotor, disposed inside of the stator with respect to a radial direction of the stator, rotatable independently from the stator, and an outer rotor, disposed outside of the stator with respect to the radial direction of the stator, rotatable independently from the stator, the outer rotor including a plurality of convertible magnets that change polarity according to a magnetization current applied to the at least one coil; and a controller configured to apply the magnetization current to the at least one coil to control a rotation mode among a plurality of rotation modes of the inner rotor and the outer rotor by changing a magnetic pole number of the outer rotor.

## Advantageous Effects of Invention

As is apparent from the above description, a washing machine in accordance with one or more embodiments of the disclosure may rotate a first rotor and a second rotor in a plurality of rotation modes and may independently drive the two rotors using one inverter in a simple configuration without supplying a composite current, which provides high practicality and has high industrial applicability.

In addition, the disclosure is not limited to the above-described embodiments and the configurations disclosed in the embodiments may be combined and may be variously modified without departing from the scope thereof.

**Brief Description of Drawings**

FIG. 1 is a schematic perspective view of a washing machine according to a first embodiment of the disclosure.

FIG. 2 is a schematic cross-sectional view illustrating a part taken along line X-X of FIG. 1.

FIG. 3 is a schematic longitudinal cross-sectional view illustrating an assembling structure of the motor according to the first embodiment of the disclosure.

FIG. 4 is a circuit diagram illustrating a configuration of an inverter according to the first embodiment of the disclosure.

FIG. 5 is a top cross-sectional view illustrating a configuration of the motor according to the first embodiment of the disclosure and illustrates that the number of magnetic poles of an outer rotor is 32.

FIG. 6 is a top cross-sectional view illustrating a movement path of magnetic flux in FIG. 5.

FIG. 7 is a top cross-sectional view illustrating the configuration of the motor according to the first embodiment of the disclosure and illustrates that the number of magnetic poles of an outer rotor is 16.

FIG. 8 is a top cross-sectional view illustrating a movement path of magnetic flux in FIG. 7.

FIG. 9 is a view illustrating curve B-H (a magnetic hysteresis curve) when magnets having different coercive forces are used for the fixed magnet and the convertible magnet.

FIGS. 10A, 10B, 10C, 10D, 10E and 10F are views illustrating rotation modes when a magnetic pole number of the outer rotor is 32.

FIGS. 11A, 11B, 11C, 11D, 11E and 11F are views illustrating rotation modes when a magnetic pole number of the outer rotor is 16.

FIG. 12 is a view illustrating a phase difference between the outer rotor and the inner rotor, FIG. 13 is a view illustrating a relationship between a d-axis current and a q-axis current.

FIG. 14 is a view illustrating a relationship between the d-axis current and the q-axis current for decreasing a phase difference.

FIG. 15 is a graph illustrating a relationship among a phase difference, an induced voltage, and power consumption.

FIG. 16 is a graph for estimating step out.

FIG. 17 is a top cross-sectional view illustrating a configuration of the motor according to the second embodiment of the disclosure and illustrates that the number of magnetic poles of the outer rotor is 32.

FIG. 18 is a top cross-sectional view illustrating the configuration of the motor according to the second embodiment of the disclosure and illustrates that the number of magnetic poles of the outer rotor is 16.

FIGS. 19 to 24 are top cross-sectional views illustrating a sequence of magnetization through a plurality of times.

FIG. 25 is a view illustrating a position relationship between the convertible magnet and the tee when a phase of applying a current is not converted.

FIG. 26 is a view illustrating a position relationship between the convertible magnet and the tee when the phase of applying a current is converted.

FIG. 27 is a view illustrating a disposition of a magnetic sensor for the convertible magnets and the fixed magnets.

FIG. 28 is a view illustrating that the convertible magnets are detected using the magnetic sensor.

FIG. 29 is a view illustrating a disposition of the magnetic sensor for the convertible magnets and the fixed magnets.

FIG. 30 is a view illustrating that a different magnetic pole part of the fixed magnet is detected using the magnetic sensor.

FIG. 31 is a top cross-sectional view illustrating a configuration of the motor according to a third embodiment of the disclosure.

FIG. 32 is a top cross-sectional view illustrating a configuration of the motor according to a fourth embodiment of the disclosure.

FIG. 33 is a top cross-sectional view illustrating a configuration of the motor according to a fifth embodiment of the disclosure.

FIG. 34 is a top cross-sectional view illustrating a state in which a groove is formed at a front end of the tee.

**Best Mode for Carrying out the Invention**

Embodiments disclosed in the disclosure and components shown in the drawings are merely preferable examples and various modifications capable of replacing the embodiments and drawings of the disclosure may be made at the time of filing the application.

*Also, the terms used herein are to explain the embodiments but are not intended to limit and/or define the disclosure. Singular forms, unless contextually otherwise defined, include plural forms. Throughout the disclosure, the terms "comprise", "include", "have" or the like are used herein to specify the presence of stated features, numbers, steps, operations, elements, components or combinations thereof but do not preclude the presence or addition of one or more other features, numbers, steps, operations, elements, components, or combinations thereof.

Also, even though the terms including ordinals such as first, second and the like may be used for describing various components, the components will not be limited by the terms and the terms are used only for distinguishing one component from others. For example, without departing from the scope of the disclosure, a first component may be referred to as a second component, and similarly, the second component may be referred to as the first component. The term "and/or" includes any and all combinations or one of a plurality of associated listed items.

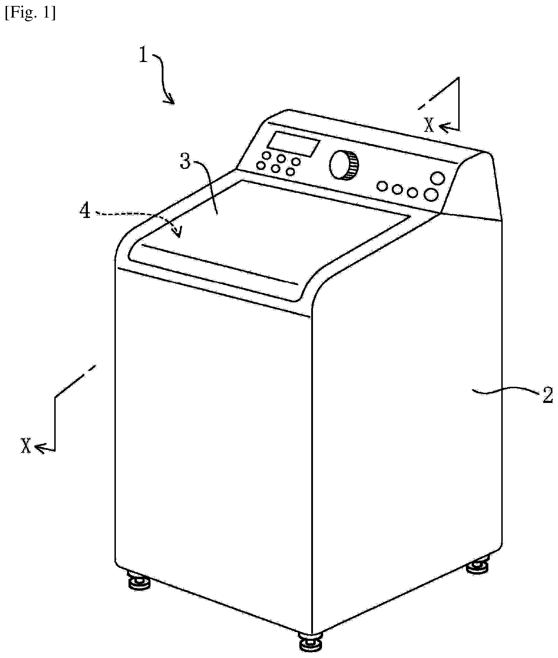

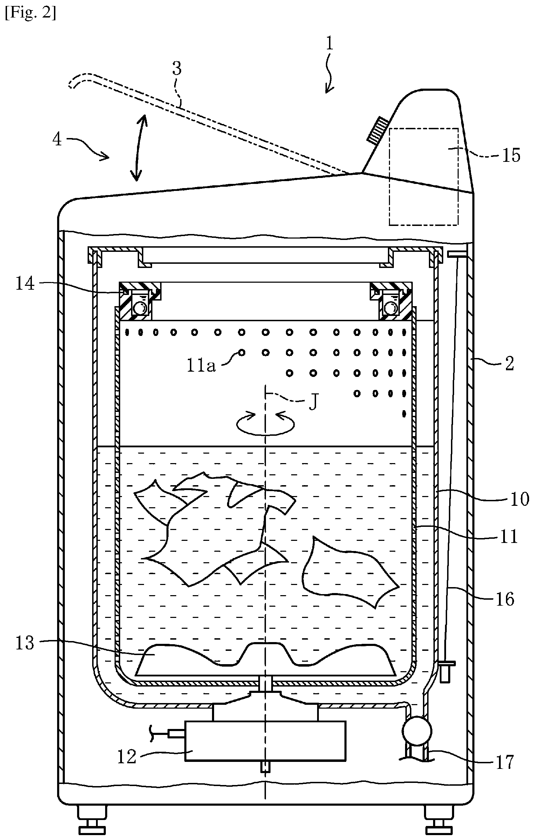

A configuration of a washing machine will be discussed with respect to an embodiment of the disclosure. FIG. 1 is a schematic perspective view of a washing machine according to a first embodiment of the disclosure, and FIG. 2 is a schematic cross-sectional view illustrating a part taken along line X-X of FIG. 1.

In FIG. 1, a washing machine 1 according to the first embodiment of the disclosure is a fully automatic washing machine capable of performing each operation of washing, rinsing, and spin-drying through automatic control. The washing machine 1 includes a case 2 having a lengthwise rectangular box shape and an inlet 4 formed thereabove and opened and closed by a cover 3. Withdrawing and inserting of laundry is performed through the inlet 4 (a so-called a longitudinal washing machine having a vertical shaft). Various switches or a display operated by a user is installed behind the inlet 4.

In FIG. 2, a washing tub 10, a spin-drying tub 11, a motor 12, a pulsator 13, a balancer 14, a controller 15 and the like are installed in the case 2. Particularly, since the washing machine 1 includes the motor 12 having a compact size and capable of performing adequate performance for each operation of the washing machine, the motor 12 will be separately described below in detail.

The washing tub 10 is a cylindrical container including a water-storable bottom and is suspended in the case 2 by a plurality suspending members 16 while an opening faces the inlet 4 thereabove. To an inside of the washing tub 10, water is supplied through a water inlet device (not shown). A drainpipe 17 controlled by a valve to be opened and closed is connected to a lower part of the washing tub 10, and unnecessary water is discharged outside the washing machine 1 through the drainpipe 17.

The spin-drying tub 11 is a cylindrical container that has a size smaller than the washing tub 10 and includes a bottom that accommodates laundry. The spin-drying tub 11 includes an opening that faces the inlet 4 and is accommodated in the washing tub 10 while being rotatable around a longitudinal shaft J extended in a perpendicular direction. All of laundry processing is performed in the above-described spin-drying tub 11. A plurality of drainage holes 11a (partially shown in the drawing) are formed throughout the entire surface of a cylindrical perimeter wall of the spin-drying tub 11. The balancer 14 is installed at the opening of the spin-drying tub 11.

The balancer 14 is a ring-shaped member in which a plurality of balls or a viscous fluid is accommodated. The balancer 14 adjusts an imbalance of weight generated by deviation of laundry while the spin-drying tub 11 rotates.

The pulsator 13 having a circular plate shape with stirring blades on a top surface is rotatably installed at a low part of the spin-drying tub 11.

The controller 15 includes hardware such as a central processing unit (CPU), a read-only memory (ROM) or the like and software such as a control program and the like and controls each operation performed by the washing machine 1. The controller 15 is electrically connected to various switches, the motor 12 and the like, and the control program executes washing, rinsing, and spin-drying operations according to an instruction of the user. For example, in the washing or rinsing operation, the motor 12 rotates while reversing the pulsator 13 on a certain cycle, to stir laundry with water or a detergent. In the spin-drying operation, the motor 12 rotates the spin-drying tub 11 in a certain direction at high speed to pressurize laundry toward a peripheral wall to spin-dry using a centrifugal effect.

The motor 12 has an exterior in a flat cylindrical shape with a diameter smaller than that of the washing tub 10 and is attached to the lower part of the washing tub 10 to allow a longitudinal shaft to pass therethrough.

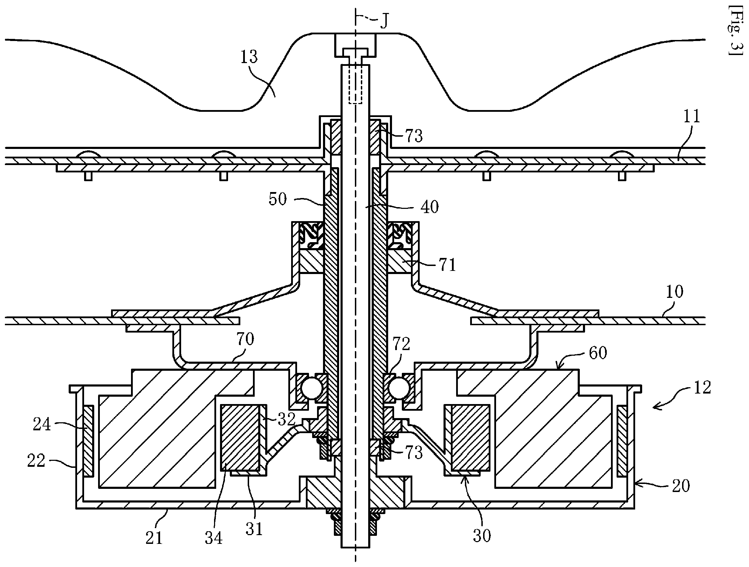

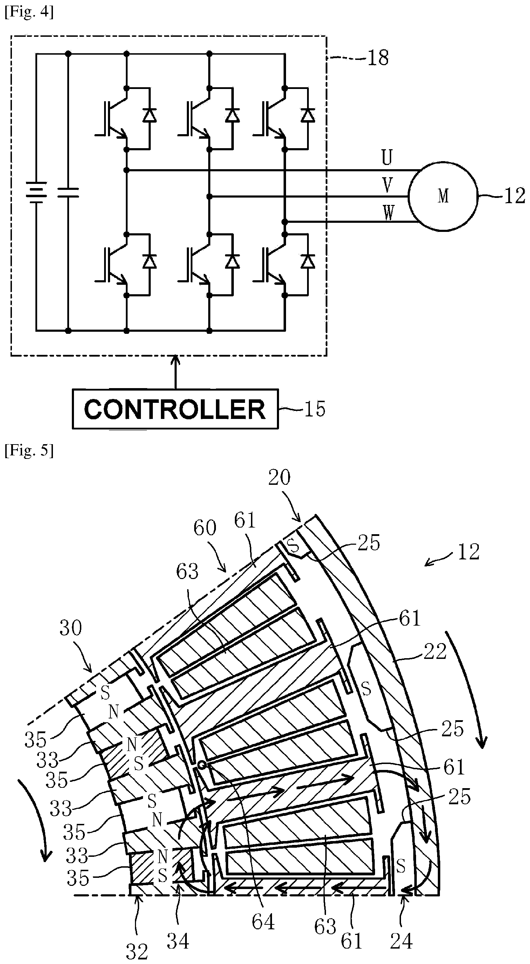

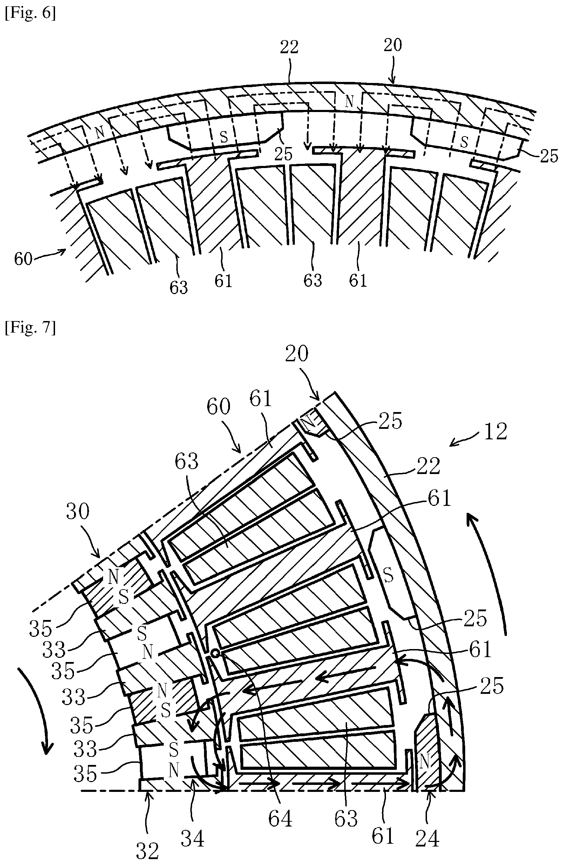

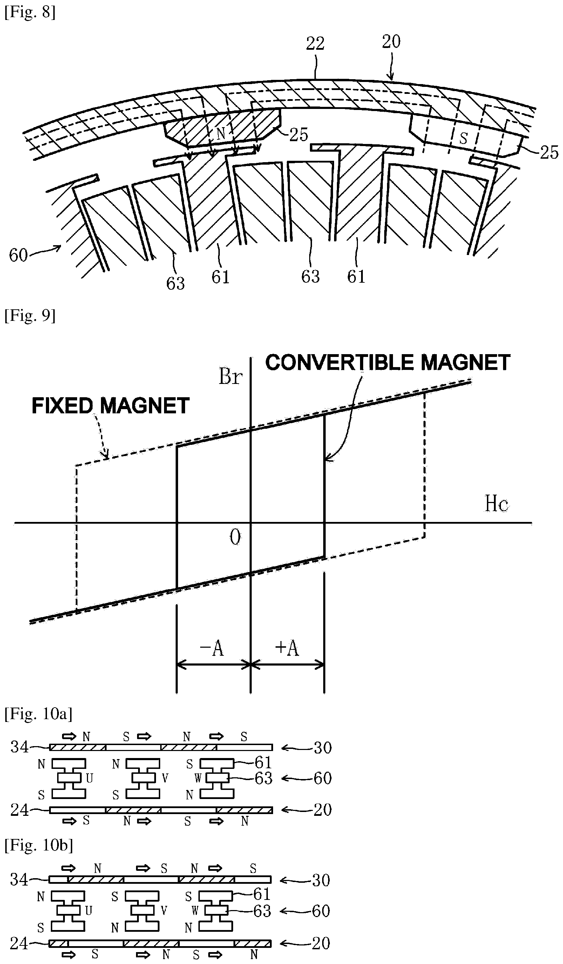

FIG. 3 is a schematic longitudinal cross-sectional view illustrating an assembling structure of the motor according to the first embodiment of the disclosure. FIG. 4 is a circuit diagram illustrating a configuration of an inverter according to the first embodiment of the disclosure. FIG. 5 is a top cross-sectional view illustrating a configuration of the motor according to the first embodiment of the disclosure and illustrates that the number of magnetic poles of an outer rotor is 32. FIG. 6 is a top cross-sectional view illustrating a movement path of magnetic flux in FIG. 5. FIG. 7 is a top cross-sectional view illustrating the configuration of the motor according to the first embodiment of the disclosure and illustrates that the number of magnetic poles of an outer rotor is 16. FIG. 8 is a top cross-sectional view illustrating a movement path of magnetic flux in FIG. 7.

In FIG. 3, the motor 12 includes an outer rotor 20, that is, a second rotor, an inner rotor 30, that is, a first rotor, an inner shaft 40, an outer shaft 50, a stator 60 and the like. That is, the motor 12 is a so-called dual rotor motor including the outer rotor 20 and the inner rotor 30 on the outside and inside of one stator 60 in a diametrical direction. Also, the outer rotor 20 and the inner rotor 30 are connected to the pulsator 13 or the spin-drying tub 11 without interposing a clutch, an accelerator/decelerator or the like, to directly drive them.

Since the outer rotor 20 and the inner rotor 30 commonly use a coil 63 of the stator 60, the motor 12 is configured to independently rotate each of the outer rotor 20 and the inner rotor 30 by supplying a current to the coil 63. The stator 60 is installed at a bearing bracket 70 installed on a bottom surface of the washing tub 10.

The outer rotor 20 is a member having a cylindrical shape with a flat bottom and includes a bottom wall 21 with an open center, a rotor yoke 22 installed on a circumference of the bottom wall 21, and a plurality of outer magnets 24 including permanent magnets in a circular arc shape. The bottom wall 21 and the rotor yoke 22 are formed by pressing a steel plate to function as a back yoke.

In the first embodiment of the disclosure, the outer rotor 20 is a consequent rotor in which sixteen outer magnets 24 are arranged to align south poles at intervals in a circumferential direction and are fixed to an inner surface of the rotor yoke 22. Also, although described below in detail, the number of magnetic poles of the outer rotor 20 may be converted between sixteen poles and thirty two poles by reversing magnetic poles of the outer magnets 24.

The inner rotor 30 is a cylindrical member including a flat bottom with an outer diameter smaller than that of the outer rotor 20 and includes an inner bottom wall 31 with an open center, an inner peripheral wall 32 erected and installed around the inner bottom wall 31, and a plurality of inner magnets 34 including permanent magnets having a rectangular plate shape.

*In the first embodiment of the disclosure, the inner rotor 30 is a spoke type rotor in which thirty two inner magnets 34 are arranged at intervals in a radial shape in a circumferential direction and are installed and fixed to the inner peripheral wall 32. A rotor core 33 is disposed between the inner magnets 34 in the circumferential direction.

The inner shaft 40 is a cylindrical shaft member and is rotatably supported by the bearing bracket 70 through an inner bearing 73, the outer shaft 50, and ball bearings 71 and 72. A bottom end of the inner shaft 40 is connected to the outer rotor 20. A top end of the inner shaft 40 is connected to the pulsator 13.

The outer shaft 50 is a cylindrical shaft member shorter than the inner shaft 40 and having an outer diameter greater than that of the inner shaft 40 and is rotatably supported by the bearing bracket 70 through upper and lower inner bearings 73, the inner shaft 40, and the ball bearings 71 and 72. A bottom end of the outer shaft 50 is connected to the inner rotor 30. A top end of the outer shaft 50 is connected to the spin-drying tub 11.

The stator 60 has an outer diameter smaller than an inner diameter of the outer rotor 20 and is formed as an annular shape with an inner diameter larger than the outer diameter of the inner rotor 30. The stator 60, as shown in FIG. 5, is provided while a plurality of tees 61, coils 63, and the like are embedded in a resin. The stator 60 according the embodiment includes twenty four I-shaped tees 61 and the coils 63.

The tees 61 are steel members having a thin plate shape with an I-shaped longitudinal cross-section and are arranged around the entire stator 60 in a radial shape at equidistant intervals. Side ends of an inner circumference and an outer circumference of the tee 61 protrude from both corners thereof, in a shade shape in a circumferential direction.

Here, between adjacent tees 61, a slot opening of the outer rotor 20 is larger than a slot opening of the inner rotor 30. As the slot opening of the outer rotor 20 having a convertible magnet 25 is large, it becomes easy to convert a magnetic pole.

The coil 63 is formed on each of the tees 61 by interposing an insulator between the tees 61 and winding three wires coated with insulators in a certain order and configuration. A group of the tees 61 on which the coils 63 are formed are embedded in a thermosetting resin by molding while only cross sections of diameters are exposed, and are fixed in a certain arrangement while being insulated.

The stator 60, the inner rotor 30, and the outer rotor 20 are attached in such a way that ends of the tees 61 at the inner rotor 30 face the rotor cores 33 with a slight gap, and ends of the tees 61 at the outer rotor 20 face the outer magnets 24 with a slight gap.

A position sensor 64 is disposed between adjacent tees 61. The position sensor 64 is disposed at a position near the inner rotor 30 to recognize a position of the inner rotor 30.

In FIG. 4, a three phase inverter 18 is connected to the motor 12. In the motor 12, when currents are applied to the coils 63 of the stator 60, different poles are generated at outer sides and inner sides of the tees 61 at the same time and the outer rotor 20 and the inner rotor 30 independently rotate accompanying a rotor system.

As described above, since the stator 60 is commonly used by the outer rotor 20 and the inner rotor 30, the outer rotor 20 and the inner rotor 30 may be rotated in a plurality of rotation modes by one inverter 18.

An operation of converting the number of magnetic poles will be discussed with reference to the drawings. FIG. 5 is a top cross-sectional view illustrating a major portion of the motor 12 and illustrates a state of a mechanical angle of 45°. All of the outer magnets 24 are formed of the convertible magnets 25. All of the inner magnets 34 are formed of fixed magnets 35.

The convertible magnets 25 are magnets with polarity that is converted when magnetized currents are supplied to the coils 63 as magnetic pole number converters. The fixed magnets 35 are magnets with polarity that is not reversed even when magnetized currents are supplied to the coils 63. It is unnecessary to depend on the magnitude, type or the like of coercive force.

Here, reversing or nonreversing indicates polarities of the whole magnets and it is determined using total magnetic flux even when there are some opposite poles.

In the first embodiment of the disclosure, it is configured that a magnetic pole number St of the stator 60 is 24, a magnetic pole number of the inner rotor 30 is 32, and a maximum magnetic pole number of the outer rotor 20 is 32 and a ratio thereamong is St:m=3:4. Here, the outer rotor 20 is converted in magnetic pole number through magnetization to be convertible into 32 or 16 poles.

In a state shown in FIG. 5, the outer magnets 24 are arranged at intervals in the circumferential direction and to allow surfaces of the outer magnets 24 at the tees 61 to be S poles. Since the outer magnets 24 are arranged as described above, the rotor yoke 22 of the outer rotor 20 between the outer magnets 24 having S poles becomes N pole and the magnetic pole number of the outer rotor 20 becomes 32. Here, since a salient pole structure is not provided at the N pole of the rotor yoke 22, magnetic resistances between the rotor yoke 22 and the tees 61 become approximately identical. It is possible to provide a configuration with vibration or noise suppressed using the above-described consequent rotor without a salient structure.

As shown in FIG. 6, magnetic flux out of the N pole of the rotor yoke 22 passes through the inner rotor 30 through the tee 61, enters the S pole of the outer magnet 24 through another tee 61, passes through the rotor yoke 22, and returns to the N pole of the rotor yoke 22.

Here, since an air gap that is a gap between the rotor yoke 22 of the N pole and the tee 61 is large when the magnetic pole number of the outer rotor 20 is 32, induced voltage is decreased. Due thereto, it is necessary to allow the magnetic pole number of the outer rotor 20 to be 32 in spin-drying that requires high speed or low torque.

Meanwhile, when some magnetic poles of the outer magnets 24 are reversed by supplying magnetization currents to the coil 63 and converted to alternately arrange N poles and S poles in the circumferential direction, the magnetic pole number of the outer rotor 20 becomes 16.

As shown in FIG. 8, magnetic flux out of the N pole of the outer magnet 24 passes through the inner rotor 30 through the tee 61, enters the S pole of the outer magnet 24 through another tee 61, passes through the rotor yoke 22, and returns to the N pole of the outer magnet 24.

Here, when the magnetic pole number of the outer rotor 20 is 16, since an air gap that is a gap between the outer magnet 24 of N pole and the tee 61 is smaller than that of a case of 32 poles, induced voltage is increased. Due thereto, it is necessary to allow the magnetic pole number of the outer rotor 20 to be 16 in washing that requires low speed or high torque.

Subsequently, a method of converting magnetic poles of the outer magnets 24 from 32 poles into 16 poles will be described with reference to FIG. 5.

Although there is shown 32 poles in FIG. 5, it is possible to provide 16 poles by converting a magnetic pole of a first magnet from a bottom from S pole into N pole. Magnetization currents are applied to the coils 63 to allow a magnetic field to flow over from a first tee 61 to a second tee 61 from a bottom in a direction as an arrow shown in FIG. 5. As described above, it is possible to reverse a magnetic pole of the first outer magnet 24 from the bottom from S pole into N pole.

Subsequently, a method of converting magnetic poles of the outer magnets 24 from 16 poles into 32 poles will be described with reference to FIG. 7.

Although there is shown 16 poles in FIG. 7, it is possible to provide 32 poles by converting a magnetic pole of a first magnet from a bottom from N pole into S pole. Magnetization currents are applied to the coils 63 to allow a magnetic field to flow over from the first tee 61 to the second tee 61 from the bottom in a direction as an arrow shown in FIG. 7. As described above, it is possible to reverse the magnetic pole of the first outer magnet 24 from the bottom from N pole into S pole.

Also, in an arrangement of the outer magnets 24 shown in FIG. 7, a previous pole may remain at some of the outer magnet 24 that is the first from the bottom. However, magnetization may be completely reversed by performing a plurality of times of magnetization while an angle of the outer rotor 20 and a phase of the magnetization currents that flow through the coils 63 are appropriately adjusted as necessary. An order of performing the above-described plurality of times of magnetization will be described in a following second embodiment that includes the outer rotor 20 formed of an SPM type rotor.

Here, magnetic resistance at a path of magnetic flux that passes through the outer magnet 24 between the magnetized tees 61 is greater than magnetic resistance at a path of magnetic flux that passes near an air gap of the inner rotor 30. That is, part of magnetic flux that passes through the inner magnet 34 diverges at the inner rotor 30 to pass near the air gap.

Due thereto, since a larger amount of magnetic flux flows through the convertible magnet 25 than the fixed magnet 35 when magnetization currents are supplied, a magnetization force of the convertible magnet 25 becomes greater than a magnetization force of the fixed magnet 35.

Since a magnetic path of magnetic flux for magnetization is adequately set as described above, for example, even when the convertible magnet 25 and the fixed magnet 35 are formed of ferrite magnets having the same coercive force, exclusive magnetic pole conversion of the convertible magnet 25 may be stably performed.

Also, the convertible magnet 25 and the fixed magnet 35 may be configured as two or more types of magnets having different coercive forces. For example, more stable magnetization may be obtained by allowing the coercive force of the fixed magnet 35 to be greater than the coercive force of the convertible magnet 25. Also, a torque balance between the inner rotor 30 and the outer rotor 20 may be easily obtained by using a rare earth resource magnet as the fixed magnet 35 of the inner rotor 30.

FIG. 9 is a view illustrating curve B-H (a magnetic hysteresis curve) when magnets having different coercive forces are used for the fixed magnet and the convertible magnet.

In FIG. 9, when a magnetic field that is +A or more and -A or less and does not exceed the coercive force of the fixed magnet 35 is generated by applying a magnetized current to the coil 63, it is possible to reverse the polarity of the convertible magnet 25. The magnetized current is satisfied with a pulse current and magnetization is available using several ten msec.

However, in magnetizing the convertible magnet 25, it is advantageous that a voltage applied to the coil 63 is as high as possible to increase a magnetization current. Also, it is easy to perform high speed rotation such as spin-drying when a voltage is high. However, in a case of washing and rinsing with low speed rotation and high torque, efficiency of the inverter 18 is high when a voltage is not excessively high.

Accordingly, in the first embodiment of the disclosure, a voltage identical to magnetization is supplied to the inverter 18 in magnetization and spin-drying while a voltage lower than the magnetization voltage is supplied to the inverter 18. According thereto, power consumption may be reduced.

Operation of the motor with respect to a rotation mode is discussed herein. Here, an operation of converting a magnetic pole number, in which polarity of the convertible magnet 25 is reversed by supplying a magnetic current to the coil 63, is controlled by the controller 15. That is, based on a control command of the controller 15, the outer rotor 20 and the inner rotor 30 are driven to rotate in a plurality of rotation modes.

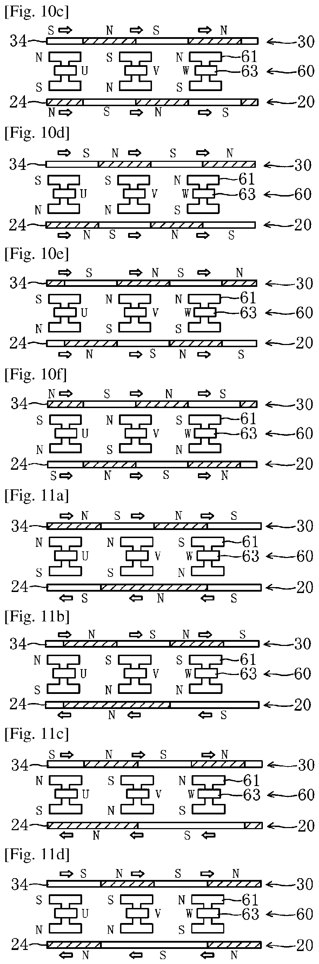

FIGS. 10A, 10B, 10C, 10D, 10E and 10F are views illustrating rotation modes when a magnetic pole number of the outer rotor is 32.

FIGS. 10A, 10B, 10C, 10D, 10E and 10F illustrate positions of the stator 60, the outer rotor 20, and the inner rotor 30 during an electrical degree 360° in rotation of a three phase motor as six steps or operations and mimetically illustrate a principle in which the outer rotor 20 and the inner rotor 30 rotate.

In FIGS. 10A, 10B, 10C, 10D, 10E and 10F, the outer rotor 20 and the inner rotor 30 have the same pole numbers that are 32 and a mechanical angle thereof is 45°. When driving currents are applied to the coils 63 of three phases such as a U phase, a V phase, and a W phase, a magnetic pole is generated at the tees 61. The magnetic pole has opposite poles at sides of the tees 61 toward the inner rotor 30 and the outer rotor 20.

In a first step shown in FIG. 10A, sides of the U phase and V phase tees 61 toward the inner rotor 30 have N poles and a side of a W phase tee 61 toward the inner rotor 30 has S pole. Due thereto, sides of the U phase and V phase tees 61 toward the outer rotor 20 have S poles and a side of the W phase tee 61 toward the outer rotor 20 has N pole. Also, hereinafter, only poles of the tees 61 toward the inner rotor 30 will be described.

In the first step, when the outer rotor 20 and the inner rotor 30 deviate at an electrical degree of 180°, a force of rotating in a right direction in FIG. 10 is received as torque.

In a second step shown in FIG. 10B, a magnetic pole of the V phase tee 61 is reversed. Due thereto, the V phase tee 61 has S pole while the U phase tee 61 toward the inner rotor 30 has N pole and the outer rotor 20 and the inner rotor 30 move in the right direction while the W phase tee 61 has S pole.

In a third step shown in FIG. 10C, a magnetic pole of the W phase tee 61 is reversed. Due thereto, the W phase tee 61 has N pole and the outer rotor 20 and the inner rotor 30 move in the right direction while the U phase tee 61 toward the inner rotor 30 has N pole and the V phase tee 61 has S pole.

In a fourth step shown in FIG. 10D, a magnetic pole of the U phase tee 61 is reversed. Due thereto, the outer rotor 20 and the inner rotor 30 move in the right direction while the U phase tee 61 toward the inner rotor 30 has S pole, the V phase tee 61 has S pole, and the W phase tee 61 has N pole.

In a fifth step shown in FIG. 10E, the magnetic pole of the V phase tee 61 is reversed. Due thereto, the V phase tee 61 has N pole while the U phase tee 61 toward the inner rotor 30 has S pole and the outer rotor 20 and the inner rotor 30 move in the right direction while the W phase tee 61 has N pole.

In a sixth step shown in FIG. 10F, the magnetic pole of the W phase tee 61 is reversed. Due thereto, the W phase tee 61 has S pole and the outer rotor 20 and the inner rotor 30 move in the right direction while the U phase tee 61 toward the inner rotor 30 has S pole and the V phase tee 61 has N pole.

As described above, the outer rotor 20 and the inner rotor 30 rotate in the same direction at the same speed. In the first embodiment, the rotation mode is referred to as a synchronous rotation mode. Also, even though phases of the outer rotor 20 and the inner rotor 30 slightly deviate due to load or a change in the load, it has been described that there is no deviation in phase in examples shown in FIGS. 10A to 10F.

Also, in the first embodiment of the disclosure, a position of the inner rotor 30 is recognized by the position sensor 64 installed at a side of the stator 60 toward the inner rotor 30 and three phase currents are applied but the disclosure is not limited thereto. For example, a magnetic sensor that detects a magnet at the inner rotor 30 or the outer rotor 20 may be used instead of the position sensor 64. Also, a so-called sensorless method such as using induced voltages or detection currents may be used. Also, the three phase currents may be applied using other methods such as an encoder and the like.

Subsequently, a rotation mode of a case in which a magnetic pole number of the outer rotor 20 is converted will be described with reference to FIGS. 11A to 11F.

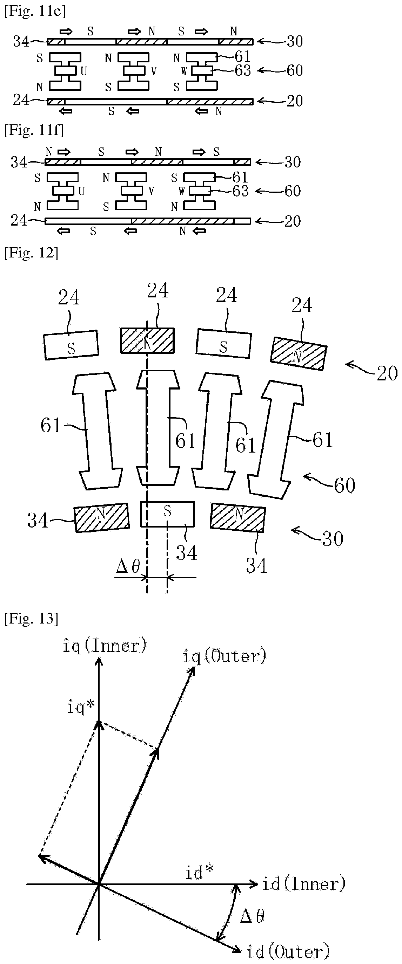

FIGS. 11A, 11B, 11C, 11D, 11E and 11F are views illustrating rotation modes when a magnetic pole number of the outer rotor is 16.

As shown in FIGS. 11A, 11B, 11C, 11D, 11E and 11F, the outer rotor 20 has 16 poles and the inner rotor 30 has 32 poles.

In a first step shown in FIG. 11A, sides of the U phase and V phase tees 61 toward the inner rotor 30 have N poles and a side of the W phase tee 61 toward the inner rotor 30 has S pole. Due thereto, sides of the U phase and V phase tees 61 toward the outer rotor 20 have S poles and a side of the W phase tee 61 toward the outer rotor 20 has N pole.

In the first step, the inner rotor 30 receives a force of rotating in a right direction of FIG. 11A as torque. Meanwhile, the outer rotor 20 receives a force of rotating in a left direction of FIG. 11A as torque.

In a second step shown in FIG. 11B, a magnetic pole of the V phase tee 61 is reversed. Due thereto, the V phase tee 61 has S pole while the U phase tee 61 toward the inner rotor 30 has N pole and the inner rotor 30 moves in the right direction and the outer rotor 20 moves in the left direction while the W phase tee 61 has S pole.

In a third step shown in FIG. 11C, a magnetic pole of the W phase tee 61 is reversed. Due thereto, the W phase tee 61 has N pole and the inner rotor 30 moves in the right direction and the outer rotor 20 moves in the left direction while the U phase tee 61 toward the inner rotor 30 has N pole and the V phase tee 61 has S pole.

In a fourth step shown in FIG. 11D, a magnetic pole of the U phase tee 61 is reversed. Due thereto, the U phase tee 61 toward the inner rotor 30 has S pole, the V phase tee 61 has S pole, the W phase tee 61 remain in N pole, the inner rotor 30 moves in the right direction, and the outer rotor 20 moves in the left direction.

In a fifth step shown in FIG. 11E, the magnetic pole of the V phase tee 61 is reversed. Due thereto, the V phase tee 61 has N pole while the U phase tee 61 toward the inner rotor 30 has S pole and the inner rotor 30 moves in the right direction and the outer rotor 20 moves in the left direction while the W phase tee 61 has N pole.

In a sixth step shown in FIG. 11F, the magnetic pole of the W phase tee 61 is reversed. Due thereto, the W phase tee 61 has S pole, the inner rotor 30 moves in the right direction, and the outer rotor 20 moves in the left direction while the U phase tee 61 toward the inner rotor 30 has S pole and the V phase tee 61 has N pole. Here, a movement amount of the outer rotor 20 is twice as much as that of the inner rotor 30.

As described above, the outer rotor 20 and the inner rotor 30 rotate in different directions at different speeds. In the first embodiment, the rotation mode is referred to as a contrary rotation mode.

Also, as the rotation mode, a different rotation ratio or the same rotation ratio of the synchronous rotation mode and the contrary rotation mode may be configured by a combination of magnetic pole numbers in addition to the first embodiment of the disclosure. As described above the synchronous rotation mode or the contrary rotation mode includes rotation modes of rotating with a random rotation ratio or rotating with different torque by rotating in the same direction or a different direction.

Although not shown in detail in FIGS. 11A, 11B, 11C, 11D, 11E and 11F, information of a position relationship of the outer rotor 20, the inner rotor 30, and the stator 60 may be obtained using a method, for example, a sensorless method, a position sensor, an encoder and the like and a phase difference $\Delta\theta$ is calculated by the controller 15 based on a position relationship of the outer magnet 24, the inner magnet 34, and the coil 63. It will be described with reference to FIGS. 12 to 14.

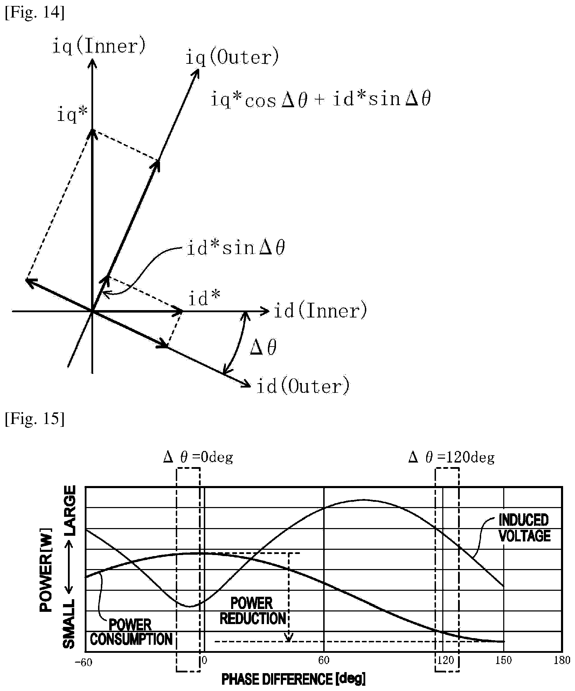

FIG. 12 is a view illustrating a phase difference between the outer rotor and the inner rotor, FIG. 13 is a view illustrating a relationship between a d-axis current and a q-axis current, and FIG. 14 is a view illustrating a relationship between the d-axis current and the q-axis current for decreasing a phase difference.

In an example shown in FIG. 12, a phase difference between the outer magnet 24 of the outer rotor 20, which has N pole, and the inner magnet 34 of the inner rotor 30, which has S pole, is referred to as $\Delta\theta$.

Hereinafter, control when phases mutually deviate and a phase difference occurs while the outer rotor 20 and the inner rotor 30 are rotated in the contrary rotation mode will be described.

In the first embodiment of the disclosure, the rotation of the inner rotor 30 is mainly controlled and the rotation of the outer rotor 20 follows the control of the inner rotor 30. Here, when a phase difference $\Delta\theta$ occurs between the outer rotor 20 and the inner rotor 30, torque of the outer rotor 20 that is an uncontrolled part is reduced. Also, at this time, a q-axis current value iq(Outer) of the outer rotor 20 is iq(Outer)=iq*cos$\Delta\theta$ (refer to FIG. 13).

Accordingly, a d-axis current value id(Inner) of the inner rotor 30 is determined based on the magnitude of the phase difference $\Delta\theta$ as shown in FIG. 14 and applied to the coil 63. In detail, the d-axis current value id(Inner) of the inner rotor 30 is determined using a q-axis current value iq(Inner) and the phase difference $\Delta\theta$ between the outer rotor 20 and the inner rotor 30 as shown in Equation (1).

$$id(Inner) = iq(Inner) \cdot (1-cos\Delta\theta) / sin\Delta\theta \ldots (1)$$

Also, when the d-axis current value id(Inner) is applied to the coil 63, a q-axis current value iq(Outer) of the inner rotor 30 is increased. In detail, the q-axis current value iq(Outer) of the inner rotor 30 is determined as shown in Equation (2).

$$iq(Outer) = iq*cos\Delta\theta + id*sin\Delta\theta \ldots (2)$$

That is, since the q-axis current value iq(Outer) of the outer rotor 20 is increased by only id*sin$\Delta\theta$ and the outer rotor 20 accelerates due to an increased amount, the phase difference $\Delta\theta$ may be decreased.

Due thereto, step-out resisting forces of the outer rotor 20 and the inner rotor 30 increase to stably rotate even in the contrary rotation mode.

Subsequently, a case in which the outer rotor 20 and the inner rotor 30 are driven in a spin-drying mode that is a high speed rotation mode at a higher speed than a certain number of rotations will be described. In the spin-drying mode, the outer rotor 20 and the inner rotor 30 are driven to rotate in the synchronous rotation mode.

FIG. 15 is a graph illustrating a relationship among a phase difference, an induced voltage, and power consumption.

In FIG. 15, power consumption becomes maximal when a phase difference $\Delta\theta$ is near 0°. Meanwhile, although power consumption is minimal when the phase difference $\Delta\theta$ is near 180°, a step out occurs when the phase difference $\Delta\theta$ exceeds 180°. Due thereto, it is necessary to control the phase difference $\Delta\theta$ to be smaller than 180°.

Here, to stably operate without step out and simultaneously to suppress power consumption to be low, as shown in FIG. 15, it is necessary to control the phase difference $\Delta\theta$ to be within a range between 90° and 180°. Also, it may be known from various experimental results that it is most effective to set the phase difference $\Delta\theta$ to be near 150°. Due thereto, in the spin-drying mode, it is preferable to set the phase difference $\Delta\theta$ between the outer rotor 20 and the inner rotor 30 to be 150 $\pm$ 10°.

Subsequently, a case in which the outer rotor 20 and the inner rotor 30 are driven in a synchronous rotation mode will be described. In the synchronous rotation mode, the outer rotor 20 and the inner rotor 30 synchronously rotate while one magnetic pole of the outer rotor 20 or the inner rotor 30 is delayed from another by a certain phase. Accordingly, rotations of the outer rotor 20 and the inner rotor 30 are controlled to allow a magnetic flux amount for the rotations of the outer rotor 20 and the inner rotor 30 to be smaller than that for low speed rotation thereof. In detail, since a magnetic flux amount is decreased when a phase difference is increased, magnetic flux densities of air gaps at the outer rotor 20 and the inner rotor 30 may be reduced without step out by adequately controlling a delayed phase as described above.

Accordingly, an induced voltage generated at the coil 63 may be suppressed, and particularly, efficiency of high speed rotation may be improved or it is possible to drive using a low voltage even in high speed rotation.

Subsequently, a method of detecting step out when a great external load is applied as a disturbance from outside to the outer rotor 20 or the inner rotor 30 will be described. As described above, although it is controlled not to step out, step out may occur when an unexpectedly great load is applied. Upon step out, since a sound or vibration occurs accompanying a great spin fluctuation, the sound or vibration may be estimated and the occurrence of step out may be reduced by allowing a motor to stop before the step out.

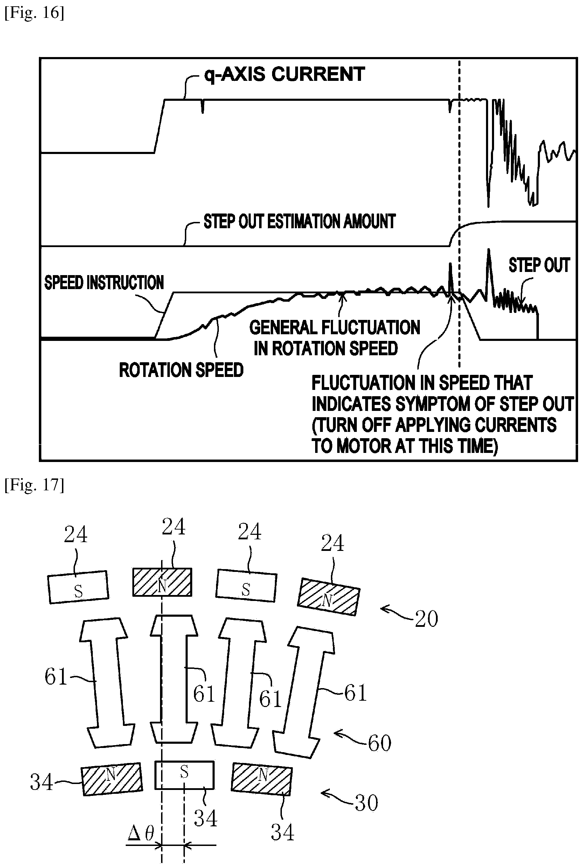

Hereinafter, a detailed method of estimating step out will be described with reference to FIG. 16.

FIG. 16 is a graph for estimating step out.

In FIG. 16, it has been checked by tests of the inventor(s) that a rotation speed of the motor 12 changes when it becomes closer to a step out phenomenon.

In detail, variance may be detected by comparing a necessary rotation speed based on a speed instruction with an actual rotation speed. At a point in time at which variance is small, although step out does not occur yet and the inner rotor 30 and the outer rotor 20 rotate while synchronously follow, step out occurs when variance increases to be higher than a certain level. Due thereto, when the variance increases to the certain value, a great electronic torque variance that occurs in step out may be previously turned off by stopping currents to the motor 12.

(Effects of the first embodiment of the disclosure)

As described above, the motor 12 according to the first embodiment of the disclosure may rotate the outer rotor 20 and the inner rotor 30 in a plurality of rotation modes using a simple configuration. That is, since it is unnecessary to supply composite currents to independently rotate two rotors as general, a plurality of inverters 18 for supplying the composite currents are unnecessary. Accordingly, compact and low-priced products are available by decreasing a volume of the inverter 18.

Also, since it is unnecessary to separate the composite currents, there is little effect of harmonic currents and there is no vibration or noise caused by harmonic distortion.

Also, when the motor 12 is loaded in the washing machine 1, a low-priced system configuration capable of corresponding to driving modes minimally necessary, for example, a synchronous rotation mode or a contrary rotation mode may be provided.

Also, since magnetic pole conversion of the convertible magnet 25 using a saturated magnetization area is performed by supplying magnetization currents to the coil 63, a magnetic flux amount is stable and noise or vibration caused by a deviation in the magnetic flux amount is hardly generated.

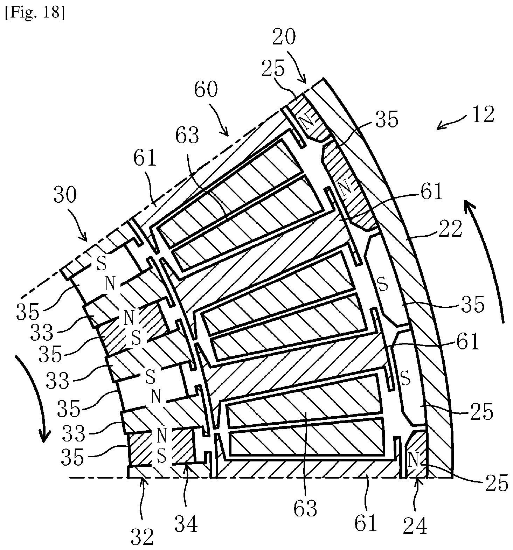

FIG. 17 is a top cross-sectional view illustrating a configuration of the motor according to the second embodiment of the disclosure and illustrates that the number of magnetic poles of the outer rotor is 32, and FIG. 18 is a top cross-sectional view illustrating the configuration of the motor according to the second embodiment of the disclosure and illustrates that the number of magnetic poles of the outer rotor is 16.

Hereinafter, like reference numerals refer to like components in the above-described first embodiment and only differences will be described.

In FIG. 17, the inner rotor 30 is a spoke type rotor in which thirty two inner magnets 34 are arranged at intervals in a radial shape in a circumferential direction and are installed and fixed to the inner peripheral wall 32. All of the inner magnets 34 are formed of the fixed magnets 35. The rotor core 33 is disposed between the inner magnets 34 in the circumferential direction.

The outer rotor 20 is an SPM type rotor, and thirty two outer magnets 24 are arranged to allow S poles and N poles to be alternately arranged in the circumferential direction and fixed to the inner surface of the rotor yoke 22.

Here, the outer magnets 24 include the convertible magnets 25 and the fixed magnets 35. In detail, among five outer magnets 24 shown in FIG. 17, first, second, and fifth magnets from the bottom are formed of convertible magnets 25. Also, third and fourth magnets from the bottom are formed of fixed magnets 35. That is, two adjacent magnets are formed of magnets having the same function.

Also, when magnetic poles of all the convertible magnets 25 are reversed by supplying magnetization currents to the coil 63, as shown in FIG. 18, the first and fifth convertible magnets 25 from the bottom are reversed from S poles to N poles and the second convertible magnet 25 from the bottom is reversed from N pole to S pole. A group of the two adjacent magnets having S poles and a group of the two adjacent magnets having N poles are converted to be alternately arranged in a circumferential direction as described above in such a way that a magnetic pole number of the outer rotor 20 becomes 16.

Here, when the magnetic pole number of the outer rotor 20 is 32 and driving currents are supplied to the coils 63, as shown in an arrow of FIG. 17, both the outer rotor 20 and the inner rotor 30 rotate clockwise. That is, it is possible to drive in a synchronous rotation mode.

Meanwhile, when the outer rotor 20 has 16 magnetic poles and driving currents are supplied to the coils 63, as shown in an arrow of FIG. 18, both the outer rotor 20 rotates counterclockwise and the inner rotor 30 rotates clockwise. That is, it is possible to drive in a contrary rotation mode.

Also, the numbers of the inner magnets 34 and the outer magnets 24 are merely examples but not limited thereto.

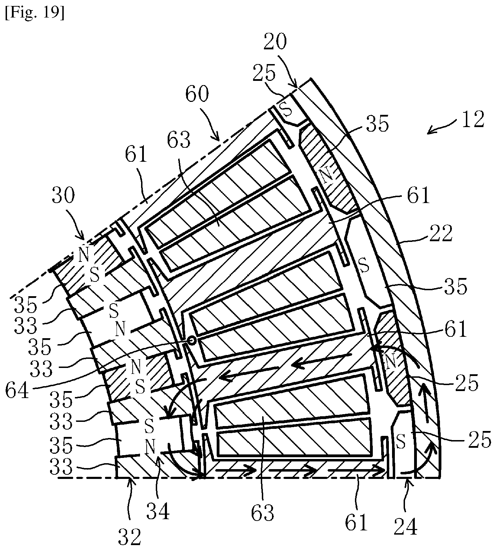

Hereinafter, a sequence of magnetizing the convertible magnets 25 through a plurality of times will be described with reference to FIGS. 19 to 24. Hereinafter, a case of changing the magnetic pole number of the outer rotor 20 from 32 to 16 will be described. Also, since a case of changing the magnetic pole number of the outer rotor 20 from 16 to 32 may be performed by reversely performing a following sequence, a description thereof will be omitted.

FIGS. 19 to 24 are top cross-sectional views illustrating a sequence of magnetization through a plurality of times.

As shown in FIG. 19, a position of the outer rotor 20 is determined. In detail, magnetization currents are applied to the coils 63 to allow a magnetic field to flow over from a first tee 61 (a U phase) to a second tee 61 (a W phase) from the bottom in a direction as shown in an arrow of FIG. 19. Here, currents of 5A are applied to generate a magnetic field capable of fixing the outer rotor 20 to a position in FIG. 19. Accordingly, magnetic poles of the outer rotor 20 and the inner rotor 30 facing the tees 61 keep their balance and stop at positions shown in FIG. 19.

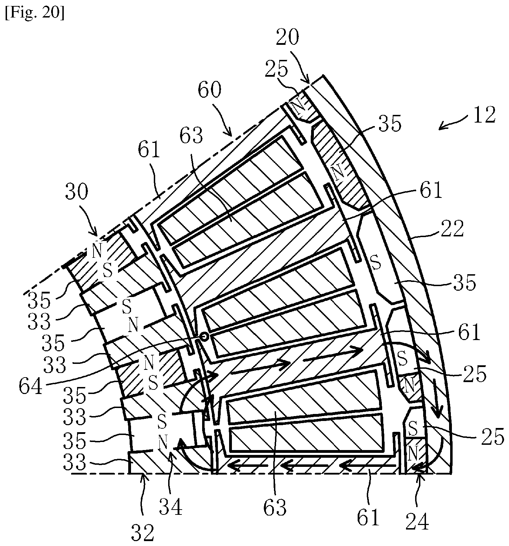

Sequentially, as shown in FIG. 20, magnetization currents are applied to the coils 63 to allow a magnetic field to flow over from the first tee 61 to the second tee 61 from the bottom at the position where the outer rotor 20 stops in a direction as shown in an arrow of FIG. 20. Here, currents for magnetization higher than that for determining the position of the outer rotor 20, for example, currents about 30 A are applied. Accordingly, the first and second convertible magnets 25 from the bottom, as shown in FIG. 20, opposite magnetic poles are partially magnetized.

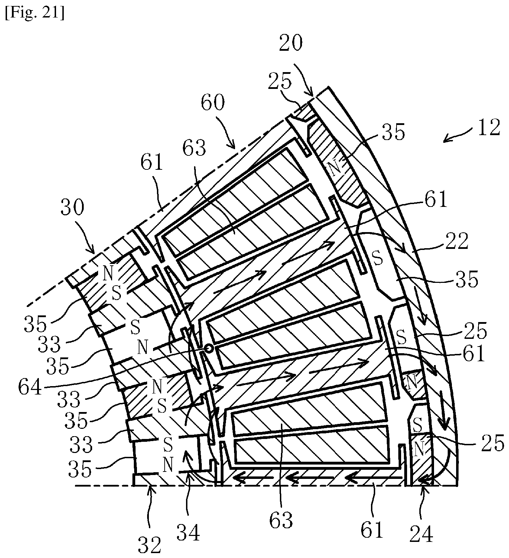

Sequentially, as shown in FIG. 21, currents are applied to the coil 63 to allow a magnetic field to flow through the first (a U phase), second (a W phase), and third (a V phase) tees 61 from the bottom in a direction as shown in an arrow of FIG. 21. Here, currents of 5A are applied to generate a magnetic field capable of fixing the outer rotor 20 to a position in FIG. 21. Accordingly, magnetic poles of the outer rotor 20 and the inner rotor 30 keep their balance and stop at positions shown in FIG. 21.

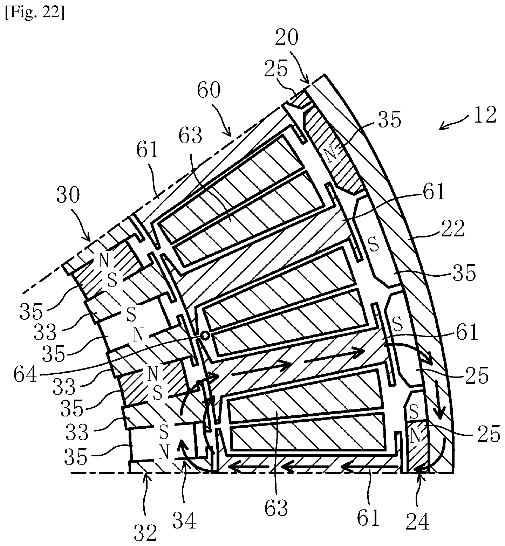

Sequentially, as shown in FIG. 22, magnetization currents are applied to the coils 63 to allow a magnetic field to flow over from the first tee 61 to the second tee 61 from the bottom at the position where the outer rotor 20 stops in a direction as shown in an arrow of FIG. 22. Here, currents for magnetization higher than that for determining the position of the outer rotor 20, for example, currents about 30 A are applied. Here, since an area of the second convertible magnet 25 from the bottom that faces the tee 61 spreads, a reversal of a magnetic pole from N pole to S pole is completed.

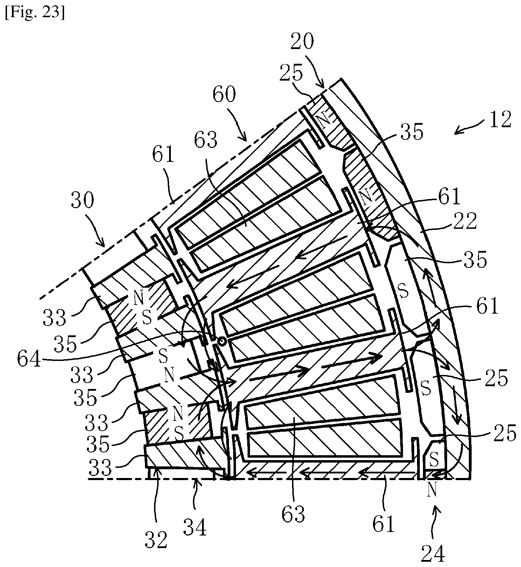

Sequentially, as shown in FIG. 23, currents are applied to the coil 63 to allow a magnetic field to flow through the first, second, and third tees 61 from the bottom in a direction as shown in an arrow of FIG. 23. Here, currents of 5A are applied to generate a magnetic field capable of fixing the outer rotor 20 to a position in FIG. 23. Accordingly, magnetic poles of the outer rotor 20 and the inner rotor 30 facing the tees 61 keep their balance and stop at positions shown in FIG. 23.

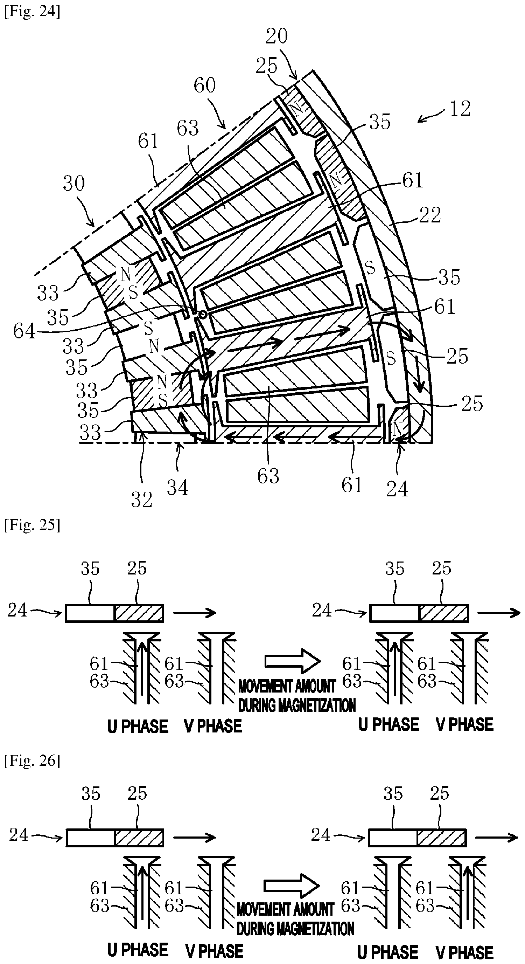

Sequentially, as shown in FIG. 24, magnetization currents are applied to the coils 63 to allow a magnetic field to flow over from the first tee 61 to the second tee 61 from the bottom at the position where the outer rotor 20 stops in a direction as shown in an arrow of FIG. 24. Here, currents for magnetization higher than that for determining the position of the outer rotor 20, for example, currents about 30 A are applied. Here, since an area of the first convertible magnet 25 from the bottom that faces the tee 61 spreads, a reversal of a magnetic pole from S pole to N pole is completed.

Also, in the second embodiment of the disclosure, although the magnetization is performed while the outer rotor 20 stops rotation, the magnetization may be performed during low-speed rotation. In this case, after the magnetization is performed at least one time while the outer rotor 20 stops rotation before initiating the magnetization, a relative position with respect to the tee 61 is changed by rotating the outer rotor 20 at a low speed and residual times of magnetization may be performed. That is, the magnetization currents may be applied when the outer rotor 20 that rotates at a low speed arrives at the position in FIG. 20 and the like. In this case, the magnetization may be performed during the synchronous rotation mode.

Also, to determine the position of the outer rotor 20, a sensorless type position signal may be used or a position signal of the inner magnet 34 at the inner rotor 30 by the position sensor 64 may be used. Also, a position signal obtained by performing a position signal treatment such as leveling of the inner rotor 30 and the outer rotor 20 and the like may be used. Also, in rotation at a low speed, compared with a stationary state, an inertia moment effect during rotation of the outer rotor 20 may be used. Even in a process in which magnetization becomes original magnetization, since a magnetization position may be more precisely determined using a position signal, reversal of magnetic poles may be easily performed with a high degree of precision. Also, when all magnetization processes are performed during rotation while fluctuation in rotation is recognized by controlling the rotation, since the inertia moment effect may be used, it is most effective.

Also, although only a first one time of magnetization in the stationary state has been described, first and second times of magnetization may be performed to convert magnetic poles while rotating after the stationary state. Also, times of magnetization are not limited thereto and may be repeatedly performed to improve the degree of precision to be higher by performing magnetization for magnetic pole conversion.

However, when the magnetization is performed during rotation of the outer rotor 20, a phase of applying a current may be converted according to a movement of the outer rotor 20. It will be described with reference to FIGS. 25 to 30.

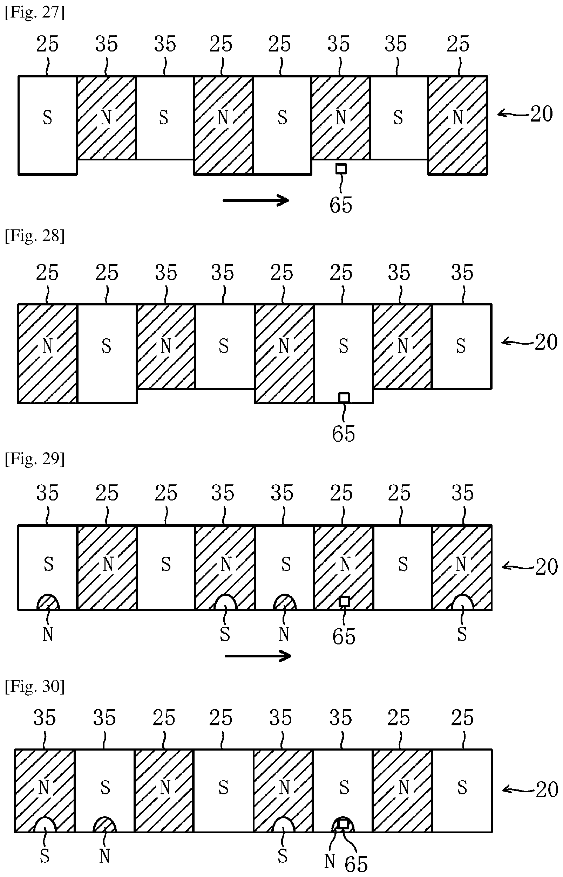

FIG. 25 is a view illustrating a position relationship between the convertible magnet and the tee when a phase of applying a current is not converted, FIG. 26 is a view illustrating a position relationship between the convertible magnet and the tee when the phase of applying a current is converted, FIG. 27 is a view illustrating a disposition of a magnetic sensor for the convertible magnets and the fixed magnets, FIG. 28 is a view illustrating that the convertible magnets are detected using the magnetic sensor, FIG. 29 is a view illustrating a disposition of the magnetic sensor for the convertible magnets and the fixed magnets, and FIG. 30 is a view illustrating that a different magnetic pole part of the fixed magnet is detected using the magnetic sensor.

In detail, as shown in FIG. 25, when the rotation of the outer rotor 20 is quick compared with a magnetization current pulse time when magnetizing only using the U phase tee, since the convertible magnet 25 deviates from the tee 61 that performs magnetization, it may be impossible to adequately perform magnetization. Accordingly, although it may be considered to decrease a rotation speed of the outer rotor 20, undesirably, fluctuation in positional precision degree or magnetization increases due to a decrease of the inertia moment effect.

Accordingly, in the second embodiment of the disclosure, as shown in FIG. 26, the tee 61 that performs magnetization is converted from a U phase into a V phase according to a rotation movement amount of the outer rotor 20. Accordingly, it is possible to adequately convert the convertible magnet 25 to have an opposite magnetic pole.

As described above, when magnetization of the outer rotor 20 having the convertible magnets 25 is performed, in applying of the magnetization currents, adequate magnetization is available by changing a current applying phase of the tee 61 magnetized according to a movement of the outer rotor 20, at the coil 63. Here, the current applying phase during magnetization is performed by adding a magnet movement amount to an initial phase of the outer rotor 20 as an initial value.

Here, the initial value of the initial phase refers to a current phase when magnetization currents are applied.

For example, an initial value of magnetization in a U phase is 0° + an offset amount, an initial value of magnetization in a W phase is -120° + an offset amount, and an initial value of magnetization in a V phase is 120°+ an offset amount. Also, an offset amount refers to a parameter that adjusts a current level to be a current peak when the convertible magnet 25 arrives at a destination.

However, to convert a magnetic pole number of the outer rotor 20 by reversing magnetic poles of the convertible magnets 25, it is necessary to determine positions of the convertible magnets 25 and the fixed magnets 35. Accordingly, in the second embodiment of the disclosure, a position sensor or a magnetic sensor 65 is used as a magnet determiner.

As shown in FIG. 27, in the outer rotor 20, a group of two adjacent convertible magnets 25 and a group of two adjacent fixed magnets 35 are alternately arranged. A bottom end of the convertible magnet 25 protrudes and extends more downward than a bottom end of the fixed magnet 35. That is, the convertible magnet 25 is longer than the fixed magnet 35.

Also, the magnetic sensor 65 is disposed opposite to a part of the convertible magnet 25 longer than the fixed magnet 35. The magnetic sensor 65 may be fixed, for example, to the stator 60 or another structure.

At a position of the outer rotor 20 shown in FIG. 27, the magnetic sensor 65 is positioned below the fixed magnet 35. Here, when the outer rotor 20 rotates, as shown in FIG. 28, the magnetic sensor 65 faces the convertible magnet 25 and receives a signal different from that of the state shown in FIG. 27. Based on the different signal, the convertible magnets 25 and the fixed magnets 35 may be determined by the magnetic sensor 65. Also, the controller 15 controls rotations of the outer rotor 20 and the inner rotor 30 based on the positions of the fixed magnets 35.

Also, even when the magnetic sensor 65 may be disposed on any one of an outside and an inside rather than the outer rotor 20 and disposed on a cross section, it is possible to obtain the same function. Also, even in a configuration having the convertible magnets 25 at the inner rotor 30, it is possible to determine magnets by identically arranging the magnetic sensor 65.

Also, even though the determination is available using the magnetic sensor 65 by changing lengths of the convertible magnets 25 and the fixed magnets 35 in an example shown in FIG. 27, the disclosure is not limited thereto. For example, magnetization may be performed to temporarily demagnetize the convertible magnets 25 and positions of the convertible magnets 25 may be determined based on a change thereof and may return to an original state.

Also, it is possible to determine a magnet by changing a magnetization state such as a magnetization amount, a magnetization shape and the like of a part facing the magnetic sensor 65. In detail, as shown in FIG. 29, a different pole may be formed at part of the fixed magnet 35 and the magnetic sensor 65 may be disposed to face the different pole. Here, when the outer rotor 20 rotates, since the magnetic sensor 65 faces the different pole of the fixed magnet 35 as shown in FIG. 30, a position of the fixed magnet 35 may be specified and the convertible magnet 25 and the fixed magnet 35 may be determined by the magnetic sensor 65.

Also, although the outer magnets 24 are formed of the convertible magnets 25 and the fixed magnets 35, all the outer magnets 24 may be formed of the convertible magnets 25. In this case, it is possible to convert a magnetic pole number by reversing only magnetic poles of a random half of the convertible magnets 25. According to the above, magnetization may be converted without distinguishing the convertible magnets 25 and the fixed magnets 35 from each other.

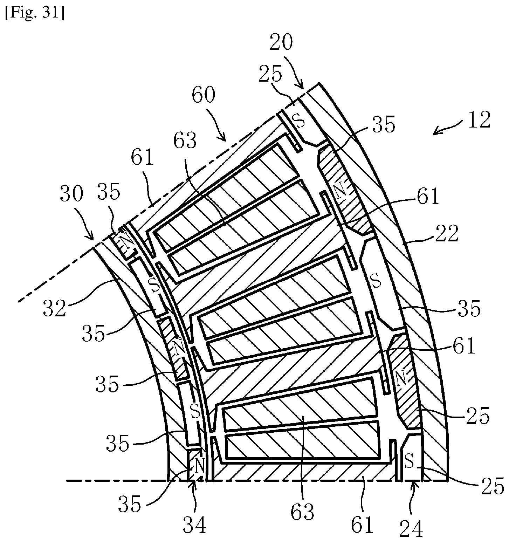

FIG. 31 is a top cross-sectional view illustrating a configuration of the motor according to a third embodiment of the disclosure.

In FIG. 31, the inner rotor 30 is an embedded SPM type rotor in which thirty two inner magnets 34 are arranged to allow S poles and N poles to be alternately arranged in a circumferential direction and are embedded in the inner peripheral wall 32. All of the inner magnets 34 are formed of the fixed magnets 35.

The outer rotor 20 is an SPM type rotor, and thirty two outer magnets 24 are arranged to allow S poles and N poles to be alternately arranged in the circumferential direction and fixed to the inner surface of the rotor yoke 22. Also, although the outer magnets 24 include the convertible magnets 25 and the fixed magnets 35, since arrangements thereof are identical to those in the second embodiment, a description thereof will be omitted.

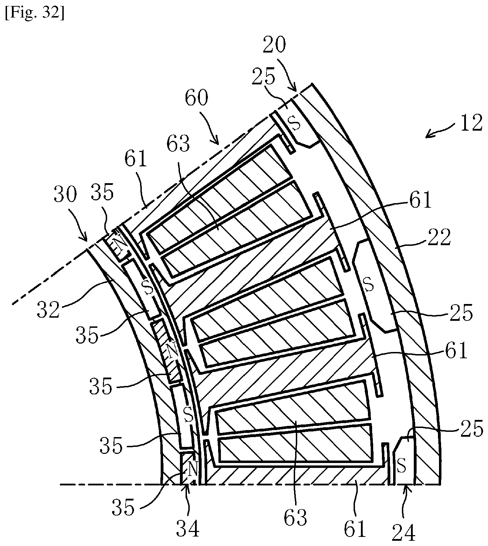

FIG. 32 is a top cross-sectional view illustrating a configuration of the motor according to a fourth embodiment of the disclosure.

In FIG. 32, the inner rotor 30 is an embedded SPM type rotor in which thirty two inner magnets 34 are arranged to allow S poles and N poles to be alternately arranged in a circumferential direction and are embedded in the inner peripheral wall 32. All of the inner magnets 34 are formed of the fixed magnets 35.

The outer rotor 20 is a consequent rotor in which sixteen outer magnets 24 are arranged to align S poles at intervals in the circumferential direction and are fixed to the inner surface of the rotor yoke 22. All of the outer magnets 24 are formed of the convertible magnets 25, and a magnetic pole number of the outer rotor 20 may be converted between 16 and 32 by reversing magnetic poles of the convertible magnets 25. Also, since the reversal of the magnetic poles of the convertible magnets 25 is identical to that in the first embodiment, a description thereof will be omitted.

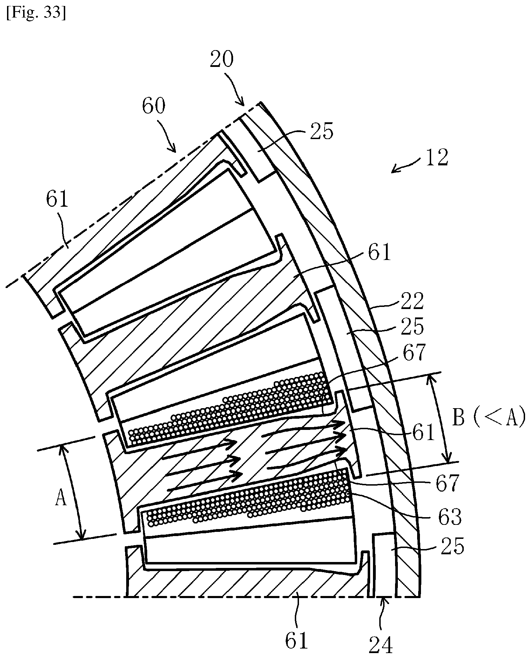

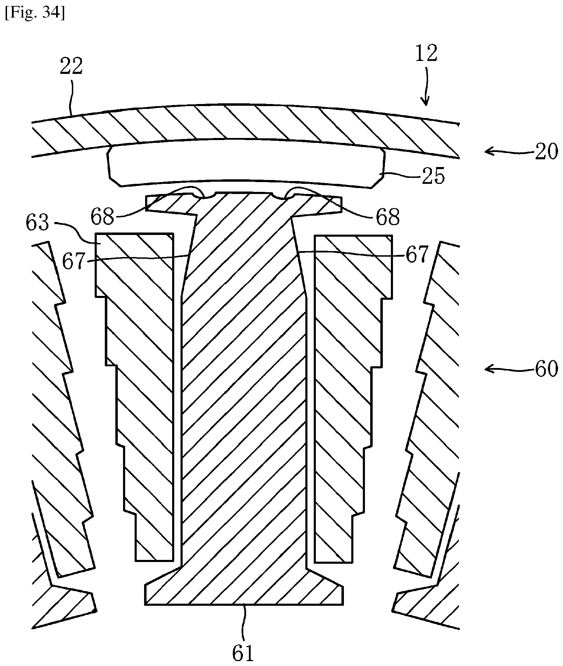

FIG. 33 is a top cross-sectional view illustrating a configuration of the motor according to a fifth embodiment of the disclosure, and FIG. 34 is a top cross-sectional view illustrating a state in which a groove is formed at a front end of the tee.

In FIG. 33, a narrow width portion 67 is installed at the tee 61 to allow a width of a part of the tee 61 toward the outer rotor 20 having the convertible magnet 25 to be narrower than a width of a part of the tee 61 toward the inner rotor 30. The narrow width portion 67 is formed to allow a width of the tee 61 to be narrower toward the outer rotor 20.

As described above, the density of magnetic flux may be increased by installing the narrow width portion 67 at the tee 61 and reducing the width of the part of tee 61 toward the outer rotor 20. That is, magnetic flux of magnetization generated by currents applied to the coil 63 may intensively flow toward the convertible magnet 25 and the magnetic pole of the convertible magnet 25 may be stably reversed using less currents. Also, a shape of the narrow width portion 67 is not particularly limited, and for example, may be a step shape in which a width of a part of the tee 61 toward the outer rotor 20 is narrow.

Also, the coil 63 is wound on the tee 61 to allow times of being wound on a part toward the outer rotor 20 having the convertible magnet 25 to be more than times of being wound on a part toward the inner rotor 30. Due thereto, it is possible to allow magnetic flux toward at the convertible magnet 25 to be more intensive than that of opposite side thereof.

Also, an angle width of the front end of the tee 61 is formed to allow an angle width B toward the outer rotor 20 having the convertible magnet 25 to be smaller than an angle width A toward the inner rotor 30 (B<A). Due thereto, it is possible to allow magnetic flux toward the convertible magnet 25 to be more intensive than that of opposite side thereof.

Also, even when an angle width of the front end of the tee 61 is identical throughout parts toward the outer rotor 20 and the inner rotor 30, the same function may be obtained by forming a cross section of the front end of the tee 61 to allow a part toward the outer rotor 20 having the convertible magnet 25 to be smaller than a part toward the inner rotor 30.

In detail, as shown in FIG. 34, a groove 68 axially extended is formed in a surface of the front end of the tee 61 facing the outer rotor 20. Two grooves 68 are formed at an interval in a circumferential direction. As described above, it is possible to allow the magnetic flux at the convertible magnet 25 to be more intensive than that of opposite side thereof by forming the front end of the tee 61 to allow an air gap area except the grooves 68 substantially facing the outer magnet 24 to be smaller than an air gap area toward the inner rotor 30.

Other embodiments of the disclosure are within the scope of the disclosure and may have following configurations. For example, although a configuration in which a magnetic pole of the convertible magnet 25 is reversed by supplying a magnetization current to the coil 63 using the coil 63 of the stator 60 as a magnetic pole number converter has been described above, in other embodiments of the disclosure, for example, separately from the coil 63 of the stator 60, a magnetization coil for reversing the magnetic pole by supplying a magnetization current to the convertible magnet 25 may be installed.

Also, although an inverter for a motor is used as the controller 15 that supplies a magnetization current to the coil 63, in other embodiments of the disclosure, for example, a separate exclusive controller may be used.

Also, a principle in which the outer rotor 20 and the inner rotor 30 are driven to rotate in the synchronous rotation mode or the contrary rotation mode has been described based on a state of the six steps shown in FIGS. 10A to 10F and 11A to 11F, in other embodiments of the disclosure, it is not limited thereto. For example, it is possible to arbitrarily select one of a square wave current applying method, a sine wave driving, vector controlling and the like.

Also, although a configuration in which a magnetic pole number of the stator 60 is 24, a magnetic pole number of the inner rotor 30 is 32, and a magnetic pole number of the outer rotor 20 is convertible between 32 and 16 has been described, in other embodiments of the disclosure, it is possible to configure the same rotation mode or a rotation mode having a different rotation number using an additional combination. That is, when the magnetic pole number of the inner rotor 30 is 2N (here, N is an even number), magnetic poles of the outer rotor 20 may be converted between 2N and N.

Also, although a configuration in which the inner rotor 30 at a high speed rotation side is connected to the spin-drying tub 11 and the outer rotor 20 at a low speed rotation side is connected to the pulsator 13 has been described, in other embodiments of the disclosure, merchantability such as spin-drying performance or washing performance may be improved by connecting the inner rotor 30 to the spin-drying tub 11 and connecting the outer rotor 20 to a rotating shaft having another function.

Also, although a magnetic pole number of the outer rotor 20 is convertible by installing the convertible magnets 25 at the outer rotor 20, in other embodiments of the disclosure, a magnetic pole number of the inner rotor 30 may be convertible by installing the convertible magnets 25 at the inner rotor 30. For example, when the magnetic pole number of the inner rotor 30 is 2N (here, N is an even number), magnetic poles of the inner rotor 30 may be converted between 2N and N.

Also, in other embodiments of the disclosure, even in the motor 12 having one of the outer rotor 20 and the inner rotor 30, a magnetic pole number of the one rotor may be convertible by installing the convertible magnets 25 at the one rotor. For example, in the case of the motor 12 having only the inner rotor 30, magnetic poles of the inner rotor 30 may be converted between 2N and N. On the other hand, in the case of the motor 12 having only the outer rotor 20, magnetic poles of the outer rotor 20 may be converted between 2N and N.

Although embodiments of the disclosure have been shown and described, it would be appreciated by those skilled in the art that changes may be made to these embodiments without departing from the disclosure, the scope of which is defined in the claims.

**Claims**

1. A washing machine comprising:

    a washing tub (10);
    a spin-drying tub (11) rotatably installed in the washing tub (10);
    a pulsator (13) rotatably installed in the spin-drying tub;
    a motor (12) configured to rotate the spin-drying tub (11) and the pulsator (13), the motor (12) including:

      an annular stator (60),
      a first rotor (30) rotatable independently from the annular stator (60), and
      a second rotor (20) rotatable independently from the annular stator (60),
      wherein one of the first rotor (30) and the second rotor (20) is connected to the spin-drying tub, and the other of the first rotor (30) and the second rotor (20) is connected to the pulsator (13);
      an inverter (18) configured to drive the motor (12); and **characterized in that**
      at least one processor (15) is configured to control the inverter (18) and drive the first rotor (30) and the second rotor (20) in a plurality of rotation modes by reversing magnetic poles of at least one of the first rotor (30) and the second rotor (20).

2. The washing machine of claim 1, further comprising a magnetic pole number converter configured to convert a magnetic pole number by reversing magnetic poles of at least one of the first rotor (30) and the second rotor (20), wherein the at least one processor (15) is configured to drive the first rotor (30) and the second rotor (20) in the plurality of rotation modes by controlling a conversion operation of the magnetic pole number converter.

3. The washing machine of claim 2, wherein one of the first rotor (30) and the second rotor (20) includes a plurality of convertible magnets (25) with magnetic poles that are reversible based on the conversion operation of the magnetic pole number converter, and
the other of the first rotor (30) and the second rotor (20) includes a plurality of fixed magnets (35) with magnetic poles that are not reversible based on the conversion operation of the magnetic pole number converter.

4. The washing machine of claim 3, wherein the at least one processor (15) is configured to control the conversion operation of the magnetic pole number converter to reverse at least one of the magnetic poles of the plurality of convertible magnets (25).

5. The washing machine of claim 3, wherein the at least one processor (15) is configured to control the conversion operation of the magnetic pole number converter to magnetize all of the plurality of convertible magnets (25) with a random magnetic flux amount.

6. The washing machine of claim 2, wherein the magnetic pole number converter has a common magnetic path with respect to the first rotor (30) and the second rotor (20) and is configured to convert a magnetic pole number by reversing magnetic poles of at least one of the first rotor (30) and the second rotor (20) when magnetization currents are applied to a coil (63) wound on the magnetic path.

7. The washing machine of claim 3, wherein the first rotor (30) includes a plurality of first magnets (24) which include a plurality of convertible magnets (25),

    the second rotor (20) includes a plurality of second magnets (34),
    the magnetic pole number converter corresponds to tees (61) of the annular stator (60), and
    among the tees (61) magnetized when magnetization currents are supplied to coils (63) wound on the tees (61), a magnetic resistance that passes through the plurality of first magnets (24) including the plurality of convertible magnets (25) is greater than a magnetic resistance near an air gap which does not pass through the plurality of second magnets (34) of the second rotor (20).

8. The washing machine of claim 2, wherein the first rotor (30) includes a plurality of first magnets (24) which include a plurality of convertible magnets (25),

the second rotor (20) includes a plurality of second magnets (34),
the magnetic pole number converter corresponds to tees (61) of the annular stator (60), and
among the tees (61) magnetized when magnetization currents are supplied to coils (63) wound on the tees (61),
a magnetic resistance that passes through the plurality of second magnets (34) of the second rotor (20) is
greater than a magnetic resistance near an air gap which does not pass through the plurality of first magnets
(24) including the plurality of convertible magnets (25) of the first rotor (30).

9. The washing machine of claim 2, wherein the first rotor (30) is an inner rotor disposed inside the annular stator (60)
with respect to a radial direction of the annular stator (60), and
the second rotor (20) is an outer rotor disposed outside of the annular stator (60) with respect to the radial direction
of the annular stator (60).

10. The washing machine of claim 9, wherein the outer rotor (20) comprises a plurality of convertible magnets (25) with
magnetic poles converted based on the conversion operation of the magnetic pole number converter, and
the inner rotor (30) comprises a plurality of fixed magnets (35) having polarities not converted based on the conversion
operation of the magnetic pole number converter.

11. The washing machine of claim 1, wherein the plurality of rotation modes comprise a first rotation mode of driving
the first rotor (30) and the second rotor (20) in opposite directions and a second rotation mode of driving the first
rotor (30) and the second rotor (20) in a same direction.

12. The washing machine of claim 11, wherein the at least one processor (15) is configured to drive the spin-drying tub
(11) and the pulsator (13) in the first rotation mode during a washing operation.

13. The washing machine of claim 11, wherein the at least one processor (15) is configured to drive the spin-drying tub
(11) and the pulsator (13) in the second rotation mode during a spin-drying operation.

14. The washing machine of claim 11, wherein the at least one processor (15) is configured to drive the first rotor (30)
and the second rotor (20) in at least two rotation modes each having a different rotation speed.

**Patentansprüche**

1. Waschmaschine, umfassend:

einen Waschbehälter (10);
einen Trockenschleuderbehälter (11), der drehbar in dem Waschbehälter (10) installiert ist;
einen Pulsator (13), der drehbar in dem Trockenschleuderbehälter installiert ist;
einen Motor (12), der dazu konfiguriert ist, den Trockenschleuderbehälter (11) und den Pulsator (13) zu drehen,
wobei der Motor (12) enthält:

einen ringförmigen Stator (60),
einen ersten Rotor (30), der unabhängig von dem ringförmigen Stator (60) drehbar ist, und
einen zweiten Rotor (20), der unabhängig von dem ringförmigen Stator (60) drehbar ist,
wobei einer von dem ersten Rotor (30) und dem zweiten Rotor (20) mit dem Trockenschleuderbehälter
verbunden ist und der andere von dem ersten Rotor (30) und dem zweiten Rotor (20) mit dem Pulsator
(13) verbunden ist;
einen Inverter (18), der dazu konfiguriert ist, den Motor (12) anzutreiben; und **dadurch gekennzeichnet,
dass**
mindestens ein Prozessor (15) dazu konfiguriert ist, den Inverter (18) zu steuern und den ersten Rotor (30)
und den zweiten Rotor (20) in einer Vielzahl von Rotationsmodi anzutreiben, indem er Magnetpole von
mindestens einem von dem ersten Rotor (30) und dem zweiten Rotor (20) umkehrt.

2. Waschmaschine nach Anspruch 1, ferner umfassend einen Magnetpolzahlwandler, der dazu konfiguriert ist, eine
Magnetpolzahl durch Umkehren von Magnetpolen von mindestens einem von dem ersten Rotor (30) und dem
zweiten Rotor (20) zu wandeln,

wobei der mindestens eine Prozessor (15) dazu konfiguriert ist, den ersten Rotor (30) und den zweiten Rotor (20) in der Vielzahl von Rotationsmodi anzutreiben, indem er einen Wandlungsvorgang des Magnetpolzahlwandlers steuert.

3. Waschmaschine nach Anspruch 2, wobei einer von dem ersten Rotor (30) und dem zweiten Rotor (20) eine Vielzahl wandelbarer Magneten (25) mit Magnetpolen enthält, die basierend auf dem Wandlungsvorgang des Magnetpolzahlwandlers umkehrbar sind, und
der andere von dem ersten Rotor (30) und dem zweiten Rotor (20) eine Vielzahl feststehender Magneten (35) mit Magnetpolen enthält, die nicht basierend auf dem Wandlungsvorgang des Magnetpolzahlwandlers umkehrbar sind.

4. Waschmaschine nach Anspruch 3, wobei der mindestens eine Prozessor (15) dazu konfiguriert ist, den Wandlungsvorgang des Magnetpolzahlwandlers zu steuern, um mindestens einen der Magnetpole der Vielzahl wandelbarer Magneten (25) umzukehren.

5. Waschmaschine nach Anspruch 3, wobei der mindestens eine Prozessor (15) dazu konfiguriert ist, den Wandlungsvorgang des Magnetpolzahlwandlers zu steuern, um alle von der Vielzahl wandelbarer Magneten (25) mit einer zufälligen Magnetflussstärke zu magnetisieren.

6. Waschmaschine nach Anspruch 2, wobei der Magnetpolzahlwandler einen gemeinsamen Magnetweg in Bezug auf den ersten Rotor (30) und den zweiten Rotor (20) aufweist und dazu konfiguriert ist, eine Magnetpolzahl zu wandeln, indem er Magnetpole von mindestens einem von dem ersten Rotor (30) und dem zweiten Rotor (20) umkehrt, wenn Magnetisierungsströme an eine Spule (63) angelegt werden, die auf den Magnetweg gewickelt ist.

7. Waschmaschine nach Anspruch 3, wobei der erste Rotor (30) eine Vielzahl erster Magneten (24) enthält, die eine Vielzahl wandelbarer Magneten (25) enthält,

der zweite Rotor (20) eine Vielzahl zweiter Magneten (34) enthält,
der Magnetpolzahlwandler T-Stücken (61) des ringförmigen Stators (60) entspricht, und
unter den T-Stücken (61), die magnetisiert werden, wenn Magnetisierungsströme Spulen (63), die auf die T-Stücke (61) gewickelt sind, zugeführt werden, ein magnetischer Widerstand, der durch die Vielzahl erster Magneten (24), die die Vielzahl wandelbarer Magneten (25) enthält, hindurchgeht, größer ist als ein magnetischer Widerstand in der Nähe eines Luftspalts, der nicht durch die Vielzahl zweiter Magneten (34) des zweiten Rotors (20) hindurchgeht.

8. Waschmaschine nach Anspruch 2, wobei der erste Rotor (30) eine Vielzahl erster Magneten (24) enthält, die eine Vielzahl wandelbarer Magneten (25) enthält,

der zweite Rotor (20) eine Vielzahl zweiter Magneten (34) enthält,
der Magnetpolzahlwandler T-Stücken (61) des ringförmigen Stators (60) entspricht, und
unter den T-Stücken (61), die magnetisiert werden, wenn Magnetisierungsströme Spulen (63), die auf die T-Stücke (61) gewickelt sind, zugeführt werden, ein magnetischer Widerstand, der durch die Vielzahl zweiter Magneten (34) des zweiten Rotors (20) hindurchgeht, größer ist als ein magnetischer Widerstand in der Nähe eines Luftspalts, der nicht durch die Vielzahl erster Magneten (24), die die Vielzahl wandelbarer Magneten (25) enthält, des ersten Rotors (30) hindurchgeht.

9. Waschmaschine nach Anspruch 2, wobei der erste Rotor (30) ein innerer Rotor ist, der innerhalb des ringförmigen Stators (60) in Bezug auf eine radiale Richtung des ringförmigen Stators (60) angeordnet ist, und
der zweite Rotor (20) ein äußerer Rotor ist, der außerhalb des ringförmigen Stators (60) in Bezug auf die radiale Richtung des ringförmigen Stators (60) angeordnet ist.

10. Waschmaschine nach Anspruch 9, wobei der äußere Rotor (20) eine Vielzahl wandelbarer Magneten (25) mit Magnetpolen, die basierend auf dem Wandlungsvorgang des Magnetpolzahlwandlers gewandelt wurden, umfasst, und
der innere Rotor (30) eine Vielzahl feststehender Magneten (35) umfasst, die Polaritäten aufweisen, die nicht basierend auf dem Wandlungsvorgang des Magnetpolzahlwandlers gewandelt wurden.

11. Waschmaschine nach Anspruch 1, wobei die Vielzahl von Rotationsmodi einen ersten Rotationsmodus zum Antreiben des ersten Rotors (30) und des zweiten Rotors (20) in entgegengesetzten Richtungen und einen zweiten Rotationsmodus zum Antreiben des ersten Rotors (30) und des zweiten Rotors (20) in einer gleichen Richtung umfassen.

**12.** Waschmaschine nach Anspruch 11, wobei der mindestens eine Prozessor (15) dazu konfiguriert ist, den Trockenschleuderbehälter (11) und den Pulsator (13) während eines Waschvorgangs in dem ersten Rotationsmodus anzutreiben.

**13.** Waschmaschine nach Anspruch 11, wobei der mindestens eine Prozessor (15) dazu konfiguriert ist, den Trockenschleuderbehälter (11) und den Pulsator (13) während eines Trockenschleudervorgangs in dem zweiten Rotationsmodus anzutreiben.

**14.** Waschmaschine nach Anspruch 11, wobei der mindestens eine Prozessor (15) dazu konfiguriert ist, den ersten Rotor (30) und den zweiten Rotor (20) in mindestens zwei Rotationsmodi anzutreiben, die jeweils eine unterschiedliche Rotationsgeschwindigkeit aufweisen.

**Revendications**

**1.** Machine à laver comprenant :

une cuve de lavage (10) ;
une cuve d'essorage centrifuge (11) installée rotative dans la cuve de lavage (10) ;
un pulsateur (13) monté rotatif dans la cuve d'essorage centrifuge ;
un moteur (12) conçu pour faire tourner la cuve d'essorage centrifuge (11) et le pulsateur (13), le moteur (12) comprenant :

un stator annulaire (60),
un premier rotor (30) pouvant tourner indépendamment du stator annulaire (60), et
un second rotor (20) pouvant tourner indépendamment du stator annulaire (60), l'un du premier rotor (30) et du second rotor (20) étant raccordé à la cuve d'essorage centrifuge, et l'autre du premier rotor (30) et du second rotor (20) étant raccordé au pulsateur (13) ;
un inverseur (18) conçu pour entraîner le moteur (12) ; et **caractérisé en ce qu'**au moins un processeur (15) est conçu pour commander l'inverseur (18) et entraîner le premier rotor (30) et le second rotor (20) dans une pluralité de modes de rotation en inversant les pôles magnétiques d'au moins l'un du premier rotor (30) et du second rotor (20).

**2.** Machine à laver selon la revendication 1, comprenant en outre un convertisseur de nombre de pôles magnétiques conçu pour convertir un nombre de pôles magnétiques en inversant les pôles magnétiques d'au moins l'un du premier rotor (30) et du second rotor (20),
ledit au moins un processeur (15) étant conçu pour entraîner le premier rotor (30) et le second rotor (20) dans la pluralité de modes de rotation en commandant une opération de conversion du convertisseur de nombre de pôles magnétiques.

**3.** Machine à laver selon la revendication 2, l'un du premier rotor (30) et du second rotor (20) comprenant une pluralité d'aimants convertibles (25) avec des pôles magnétiques qui sont réversibles sur la base de l'opération de conversion du convertisseur de nombre de pôles magnétiques, et
l'autre du premier rotor (30) et du second rotor (20) comprenant une pluralité d'aimants fixes (35) avec des pôles magnétiques qui ne sont pas réversibles sur la base de l'opération de conversion du convertisseur de nombre de pôles magnétiques.

**4.** Machine à laver selon la revendication 3, ledit au moins un processeur (15) étant conçu pour commander l'opération de conversion du convertisseur de nombre de pôles magnétiques pour inverser au moins l'un des pôles magnétiques de la pluralité d'aimants convertibles (25).

**5.** Machine à laver selon la revendication 3, ledit au moins un processeur (15) étant conçu pour commander l'opération de conversion du convertisseur de nombre de pôles magnétiques pour magnétiser la totalité de la pluralité d'aimants convertibles (25) avec une quantité de flux magnétique aléatoire.

6. Machine à laver selon la revendication 2, ledit convertisseur de nombre de pôles magnétiques possédant un trajet magnétique commun par rapport au premier rotor (30) et au second rotor (20) et étant conçu pour convertir un nombre de pôles magnétiques en inversant les pôles magnétiques d'au moins l'un du premier rotor (30) et du second rotor (20) lorsque des courants de magnétisation sont appliqués à une bobine (63) enroulée sur le trajet magnétique.

7. Machine à laver selon la revendication 3, ledit premier rotor (30) comprenant une pluralité de premiers aimants (24) qui comprennent une pluralité d'aimants convertibles (25),

ledit second rotor (20) comprenant une pluralité de seconds aimants (34),
ledit convertisseur de nombre de pôles magnétiques correspondant à des tés (61) du stator annulaire (60), et parmi les tés (61) magnétisés lorsque des courants de magnétisation sont fournis aux bobines (63) enroulées sur les tés (61), une résistance magnétique qui passe à travers la pluralité de premiers aimants (24) comprenant la pluralité d'aimants convertibles (25) étant supérieure à une résistance magnétique à proximité d'un entrefer qui ne passe pas à travers la pluralité de seconds aimants (34) du second rotor (20).

8. Machine à laver selon la revendication 2, ledit premier rotor (30) comprenant une pluralité de premiers aimants (24) qui comprennent une pluralité d'aimants convertibles (25),

ledit second rotor (20) comprenant une pluralité de seconds aimants (34),
ledit convertisseur de nombre de pôles magnétiques correspondant à des tés (61) du stator annulaire (60), et parmi les tés (61) magnétisés lorsque des courants de magnétisation sont fournis aux bobines (63) enroulées sur les tés (61), une résistance magnétique qui passe à travers la pluralité de seconds aimants (34) du second rotor (20) étant supérieure à une résistance magnétique à proximité d'un entrefer qui ne passe pas à travers la pluralité de premiers aimants (24) comprenant la pluralité d'aimants convertibles (25) du premier rotor (30).

9. Machine à laver selon la revendication 2, ledit premier rotor (30) étant un rotor interne disposé à l'intérieur du stator annulaire (60) par rapport à une direction radiale du stator annulaire (60), et
ledit second rotor (20) étant un rotor externe disposé à l'extérieur du stator annulaire (60) par rapport à la direction radiale du stator annulaire (60).

10. Machine à laver selon la revendication 9, ledit rotor externe (20) comprenant une pluralité d'aimants convertibles (25) avec des pôles magnétiques convertis sur la base de l'opération de conversion du convertisseur de nombre de pôles magnétiques, et
ledit rotor interne (30) comprenant une pluralité d'aimants fixes (35) possédant des polarités non converties sur la base de l'opération de conversion du convertisseur de nombre de pôles magnétiques.

11. Machine à laver selon la revendication 1, ladite pluralité de modes de rotation comprenant un premier mode de rotation d'entraînement du premier rotor (30) et du second rotor (20) dans des sens opposés et un second mode de rotation d'entraînement du premier rotor (30) et du second rotor (20) dans un même sens.

12. Machine à laver selon la revendication 11, ledit au moins un processeur (15) étant conçu pour entraîner la cuve d'essorage centrifuge (11) et le pulsateur (13) dans le premier mode de rotation durant une opération de lavage.

13. Machine à laver selon la revendication 11, ledit au moins un processeur (15) étant conçu pour entraîner la cuve d'essorage centrifuge (11) et le pulsateur (13) dans le second mode de rotation durant une opération d'essorage centrifuge.

14. Machine à laver selon la revendication 11, ledit au moins un processeur (15) étant conçu pour entraîner le premier rotor (30) et le second rotor (20) dans au moins deux modes de rotation possédant chacun une vitesse de rotation différente.

[Fig. 1]

[Fig. 2]

[Fig. 3]

[Fig. 4]

CONTROLLER —15

[Fig. 5]

[Fig. 6]

[Fig. 7]

[Fig. 8]

[Fig. 9]

FIXED MAGNET

CONVERTIBLE MAGNET

[Fig. 10a]

[Fig. 10b]

[Fig. 10c]

[Fig. 10d]

[Fig. 10e]

[Fig. 10f]

[Fig. 11a]

[Fig. 11b]

[Fig. 11c]

[Fig. 11d]

[Fig. 11e]

[Fig. 11f]

[Fig. 12]

[Fig. 13]

[Fig. 14]

iq(Inner)

iq(Outer)

iq* cos Δθ + id* sin Δθ

iq*

id* sin Δθ

id*

id(Inner)

Δθ

id(Outer)

[Fig. 15]

Δθ=0deg

Δθ=120deg

POWER[W]

SMALL ← → LARGE

INDUCED
VOLTAGE

POWER
CONSUMPTION

POWER
REDUCTION

−60

0

60

120

150

180

PHASE DIFFERENCE [deg]

[Fig. 16]

[Fig. 17]

[Fig. 18]

[Fig. 19]

[Fig. 20]

[Fig. 21]

[Fig. 22]

[Fig. 23]

[Fig. 24]

[Fig. 25]

[Fig. 26]

[Fig. 27]

25  35  35  25  25  35  35  25

S  N  S  N  S  N  S  N  ←20

65

[Fig. 28]

25  25  35  35  25  25  35  35

N  S  N  S  N  S  N  S  ←20

65

[Fig. 29]

35  25  25  35  35  25  25  35

S  N  S  N  S  N  S  N  ←20

N  S  N  65  S

[Fig. 30]

35  35  25  25  35  35  25  25

N  S  N  S  N  S  N  S  ←20

S  N  S  N  65

[Fig. 31]

[Fig. 32]

[Fig. 33]

[Fig. 34]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3480300 B

- US 20130160499 A1